(19) **Europäisches Patentamt / European Patent Office / Office européen des brevets**

(11) **EP 3 975 298 B1**

(12) **EUROPEAN PATENT SPECIFICATION**

(45) Date of publication and mention of the grant of the patent:
**20.12.2023 Bulletin 2023/51**

(21) Application number: **20930756.0**

(22) Date of filing: **17.04.2020**

(51) International Patent Classification (IPC):
$H01M\ 4/66^{(2006.01)}$  $H01M\ 4/13^{(2010.01)}$
$H01M\ 4/36^{(2006.01)}$  $H01M\ 4/38^{(2006.01)}$
$H01M\ 4/48^{(2010.01)}$  $H01M\ 4/58^{(2010.01)}$
$H01M\ 4/587^{(2010.01)}$  $H01M\ 10/0525^{(2010.01)}$
$H01M\ 4/02^{(2006.01)}$

(52) Cooperative Patent Classification (CPC):
**H01M 4/667; H01M 4/364; H01M 4/386; H01M 4/483; H01M 4/582; H01M 4/587; H01M 4/661; H01M 4/668; H01M 10/0525;** H01M 2004/027; H01M 2220/20

(86) International application number:
**PCT/CN2020/085424**

(87) International publication number:
**WO 2021/208093 (21.10.2021 Gazette 2021/42)**

(54) **NEGATIVE ELECTRODE PLATE, SECONDARY BATTERY, AND DEVICE THEREOF**

NEGATIVELEKTRODENPLATTE, SEKUNDÄRBATTERIE UND VORRICHTUNG DAFÜR

PLAQUE D'ÉLECTRODE NÉGATIVE, BATTERIE SECONDAIRE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.03.2022 Bulletin 2022/13**

(73) Proprietor: **Contemporary Amperex Technology Co., Limited**
**Jiaocheng District**
**Ningde**
**Fujian 352100 (CN)**

(72) Inventors:
• **LI, Cheng**
  **Ningde, Fujian 352100 (CN)**
• **HUANG, Qisen**
  **Ningde, Fujian 352100 (CN)**
• **LIU, Xin**
  **Ningde , Fujian 352100 (CN)**
• **SHENG, Changliang**
  **Ningde, Fujian 352100 (CN)**
• **WANG, Shiwen**
  **Ningde, Fujian 352100 (CN)**
• **LIU, Xianghui**
  **Ningde, Fujian 352100 (CN)**
• **PENG, Jia**
  **Ningde, Fujian 352100 (CN)**
• **LI, Mingling**
  **Ningde, Fujian 352100 (CN)**
• **LIANG, Chengdu**
  **Ningde, Fujian 352100 (CN)**

(74) Representative: **Viering, Jentschura & Partner mbB**
**Patent- und Rechtsanwälte**
**Am Brauhaus 8**
**01099 Dresden (DE)**

(56) References cited:
| EP-A1- 3 624 240 | EP-A1- 3 951 956 |
| CN-A- 105 845 978 | CN-A- 108 832 134 |
| CN-A- 109 461 880 | CN-A- 110 943 222 |
| CN-A- 110 943 227 | JP-A- 2015 185 407 |

**Description**

**TECHNICAL FIELD**

This application belongs to the field of electrochemical technology. The present application relates to a secondary battery comprising a negative electrode plate as specified in any of claims 1-14. The present application also relates to an apparatus as specified in claim 15.

**BACKGROUND**

Electrochemical devices such as lithium-ion secondary batteries have relatively high charge and discharge performance and are environmentally friendly, and are widely used in electric vehicles and consumer electronic products. The negative electrode plate is an important part of a secondary battery, and generally comprises a current collector and a negative electrode active material. Currently, in commercially available secondary batteries, graphite is generally used as the main negative electrode active material, and metal foil is generally used as the current collector. However, with the popularization of electric vehicles and consumer electronic products, people's demand for products with high energy density and long cycle life (such as high mileage electric vehicles) is increasing. The theoretical lithium intercalation capacity of graphite itself is relatively low, only 372 mAh/g, which limits the application of existing secondary batteries in fields that require high energy density and long cycle life.

Compared with traditional graphite, silicon-based materials have advantages including significantly higher theoretical capacity (4200 mAh/g), low potential for lithium intercalation, high electrochemical reversible capacity, good safety performance, and abundant resources. Therefore, use of silicon-based materials as negative electrode active materials has attracted wide attention from researchers. However, in lithium-ion batteries using silicon-based materials as the negative electrode active material, the silicon-based materials will cause a huge volume expansion (about 400%) during cycling process, which greatly reduces cycle performance of batteries. Meanwhile, silicon-based materials are subjected to pulverization and exfoliation of active materials during charging and discharging, which greatly reduces the cycle performance of batteries.

Therefore, there is an urgent need to design a negative electrode plate and a secondary battery having good stability, so as to improve cycle performance of a secondary battery while maintaining a high energy density.

EP 3 951 956 A1 describes a negative electrode current collector, a negative electrode plate, an electrochemical device and an operator. CN 108 832 134 A relates to a lithium battery, a flexible current collector and a preparation method of the flexible current collector. EP 3 624 240 A1 mentions a current collector, an electrode plate and an electrochemical device. CN1 10943227 describes a current collector, an electrode plate and an electrochemical device. CN10584597A mentions a negative plate and the preparation of the negative plate. CN109461880A relates to a negative plate and a battery. EP3972018A1 describes a negative electrode current collector, a negative electrode plate and an electrochemical device. EP3796437A1 states a lithium-ion secondary battery. EP3799172A1 introduces about a negative current collector, a negative electrode plate, an electrochemical device, and an apparatus. EP3872908A1 states an electrode plate and an electrochemical device.

**SUMMARY**

An object of the present application is to improve the cycle performance of the secondary battery while maintaining a relatively high energy density.

In order to achieve the above-mentioned object, an aspect of the present application provides a secondary battery comprising a negative electrode plate as specified in any of claims 1-14.

Another aspect of the present application provides an apparatus as specified in claim 15 comprising the secondary battery according to the first aspect of the present application.

Surprisingly, the inventors find that use of the negative electrode plate in the present application can provide a relatively good coordination between the composite current collector and the negative electrode active material layer, and improve the pulverization and exfoliation problem of silicon-based negative electrode plate during charging and discharging, thereby improving the stability of the secondary battery, especially meanwhile increasing weight energy density and cycle performance of the negative electrode plate. More preferably, by adjusting the brittleness parameter of the current collector, not only the cycle performance can be improved, but also the process yield can be improved.

**DESCRIPTION OF THE DRAWINGS**

In order to more clearly illustrate the technical solutions of embodiments of the present application, the following describes embodiments of the present application in detail with reference to the accompanying drawings and particular embodiments. A person of ordinary skill in the art can obtain other drawings and/or other embodiments based on these drawings without creative work.

Fig. 1 is a schematic structural diagram of a composite current collector in an exemplary embodiment of a secondary battery according to the present application.

Fig. 2 is a schematic structural diagram of a composite current collector in another exemplary embodiment of a secondary battery according to the present application.

Fig. 3 is a schematic structural diagram of a composite current collector in another exemplary embodiment of a secondary battery according to the present application.

Fig. 4 is a schematic structural diagram of a composite current collector in another exemplary embodiment of a secondary battery according to the present application.

Fig. 5 is a schematic structural diagram of a composite current collector in another exemplary embodiment of a secondary battery according to the present application.

Fig. 6 is a schematic structural diagram of a negative electrode plate in an exemplary embodiment of a secondary battery according to the present application.

Fig. 7 is a schematic diagram of an embodiment of a secondary battery.

Fig. 8 is an exploded view of Fig. 7.

Fig. 9 is a schematic diagram of a battery module according to an embodiment of the present application.

Fig. 10 is a schematic diagram of a battery pack according to an embodiment of the present application.

Fig. 11 is an exploded view of Fig. 10.

Fig. 12 is a schematic diagram of an embodiment of an apparatus using a secondary battery as a power source.

In the drawings, the reference signs are explained as follows:

1. Battery pack;
2. Upper case body;
3. Lower case body;
4. Battery module;
5. Battery;
51. Housing;
52. Electrode assembly:
53. Top cover assembly.
10. Composite current collector;
101. Polymer support layer;
101a, The first surface; 101b, the second surface;
1011, The first sublayer; 1012, the second sublayer; 1013, the third sublayer;
102. Metal conductive layer;
103. Protective layer;
20. Active material layer;
30. Electrode plate.

## DETAILED DESCRIPTION

### Secondary Battery

A first aspect of the present application provides a secondary battery, comprising a negative electrode plate. More specifically, the secondary battery comprises a positive electrode plate, a negative electrode plate, and an electrolyte and optionally a separator. During the charging and discharging process of the battery, active ions are intercalated and deintercalated back and forth between the positive electrode plate and the negative electrode plate. The electrolyte conducts ions between the positive electrode plate and the negative electrode plate.

[Negative electrode plate]

The negative electrode plate comprises a composite current collector and a negative electrode active material layer disposed on at least one surface of the composite current collector. As an example, a composite current collector has two opposite surfaces in its thickness direction. Two or more negative electrode active material layers may be laminated and disposed on either or both of the two surfaces of the composite current collector. It is also possible to provide one negative electrode active material layer on either or both of the two surfaces of the composite current collector.

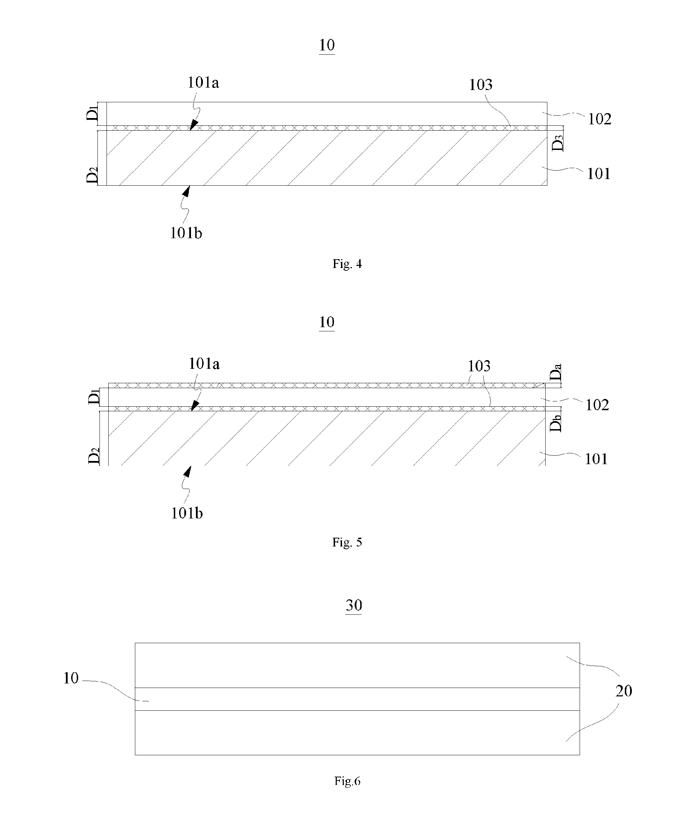

Fig. 6 shows a schematic structural diagram of a negative electrode plate 30 of an embodiment according to the present application. Referring to Fig. 6, the negative electrode plate 30 comprises a composite current collector 10 and negative electrode active material layers 20 that are laminated and disposed. As an example, the composite current collector 10 as shown in Fig. 6 has two opposite surfaces in its own thickness direction, and the negative electrode active material layers 20 are laminated and disposed on both of the two opposite surfaces of the composite current collector 10. It can be understood that the negative electrode active material layer 20 may also be laminated and disposed on any one of the two surfaces of the composite current collector 10.

In this application, the negative electrode active material layer comprises a silicon-based active material, and the silicon-based active material accounts for 0.5 wt% to 50 wt% of total mass of the negative electrode active material layer. In this application, the silicon-based active material has a high theoretical capacity, which is beneficial to increase the volumetric energy density of the secondary battery. However, due to the high volume change rate of the silicon-based active material during the charging and discharging process, a relatively high lateral extension ability and resistance to pressure in the thickness direction of the negative electrode current collector are required. In this application, by controlling the content of the silicon-based active material in the negative electrode active material layer in the negative electrode plate and the range of brittleness parameter C of the composite current collector, it is ensured that the negative electrode plate has high structural strength, good processing performance, relatively high process yield, good use safety and good reliability, thereby realizing an effective increase in volumetric energy density of the secondary battery meanwhile ensuring a long cycle life of the secondary battery and good stability during use. In some embodiments, examples of the silicon-based active material include one or more of elemental silicon, silicon-oxygen compounds, silicon-carbon composites, silicon halides, and silicon alloys. In some preferred embodiments, the negative electrode active material layer contains a silicon-oxygen compound. A preferred example of the silicon-oxygen compound includes silicon monoxide. As examples of silicon alloys, alloys containing transition metal elements, such as Ni-Si alloys and Ti-Si alloys, can be used. As examples of silicon-carbon composites, a silicon material coated with carbon on its surface may be used, or a composite material obtained by sintering a silicon material and a carbon material or by other composite methods may also be used.

In some embodiments, the negative electrode active material further comprises a carbon-based active material selected from one or more of graphite, amorphous carbon and mesocarbon microbeads, preferably graphite. The graphite may be natural graphite and/or artificial graphite, preferably artificial graphite. In this application, by further using graphite material in the negative electrode active material, it can effectively control the overall volume expansion rate of the negative electrode active material layer during cycling process, ensure that the negative electrode active material can be stably bonded on the surface of the composite current collector, and the composite current collector has excellent electronic conductivity, thereby improving the cycle performance of the secondary battery. Meanwhile, the hardness of particles of graphite material is relatively soft, which is friendly to the interface of the ultra-thin metal layer on the surface of the composite current collector. As a result, when the volume of the negative electrode is expanded, the particles of graphite material can provide a buffering effect, which is beneficial to reducing the risk of breakage of the negative electrode plate during use.

In some preferred embodiments, the volume average particle size ($D_v50$) of the silicon-based material is from 2 $\mu$m to 15 $\mu$m, preferably from 4 $\mu$m to 7 $\mu$m. In this application, by using the silicon-based material within the above ranges, not only the structural stability of the silicon-based material can be ensure, but also the damage to the metal conductive layer on surface of the current collector can be reduced, thereby effectively improving the cycle performance of the secondary battery. The volume average particle size $D_v50$ of the silicon-based material has a well-known meaning in the art, and can be measured with a well-known instrument and method in the art. For example, it can be readily measured according to "Particle Size Analysis - Laser Diffraction Method" of GB/T 19077-2016 using a laser particle size analyzer. As an example, the Mastersizer 2000E particle size analyzer from Malvern Instruments Co., Ltd., UK is used.

In some preferred embodiments, coating areal density of the negative electrode active material layer may range from 9 mg/cm$^2$ to 15mg/cm$^2$. For example, examples of the coating areal density of the negative electrode active material layer may be 10 mg/cm$^2$, 11 mg/cm$^2$, 12 mg/cm$^2$, 13 mg/cm$^2$, and 14 mg/cm$^2$. The inventors find that adopting a coating areal density in the above-mentioned preferred ranges can further improve the energy density and cycle life of the secondary battery. The coating areal density can be measured by methods and instruments (for example, a balance) known in the art. For example, the coating areal density can be calculated by measuring the weight of the dried coating per unit area. When double-sided coating is used for the composite current collector, the coating areal density of the single-sided coating can be obtained through simple data calculation. As an example, a method can be used to punch an electrode plate coated on both sides into a small disc having an area of 100 mm$^2$, dry the small disc at 120 degrees Celsius, and weigh the disc as "weight of coated electrode plate"; and weigh the uncoated current collector of 100mm$^2$ to obtain "weight of substrate". According to the formula CW=(weight of coated electrode plate - weight of substrate)/($2\times100$), the coating areal density of the negative electrode active material layer on single-side of the negative electrode plate can be calculated, and expressed in mg/cm$^2$. The electronic balance used for weighing may be a Sartorius balance.

In some preferred embodiments, compacted density of the negative electrode ranges from 1.3 g/cm$^3$ to 1.7 g/cm$^3$. For example, examples of the compacted density may be 1.3 g/cm$^3$, 1.4 g/cm$^3$, 1.5 g/cm$^3$, 1.6 g/cm$^3$, and 1.7 g/cm$^3$. The inventors find that by using a negative electrode active material layer with compacted density in the above-mentioned preferred range, energy density of the secondary battery can be ensured while improving the processability of the negative electrode plate, which is beneficial to improving the cycle life and stability during use of the secondary battery. The compacted density may be measured by methods and instruments (for example, a balance, high accuracy micrometer) known in the art. For example, the coating areal density can be calculated by measuring the weight of the dried coating in a unit area; and the thickness of the single-side active material layer on the electrode plate may be measured with a high accuracy micrometer. Ratio of the coating areal density to the thickness of the single-side active material is the compacted density. When double-sided coating is used in the composite current collector, the coating areal density of the single-sided coating can be obtained through simple data calculation and the thickness of the single-side active material is measured, then the compacted density can be calculated. As an example, a high accuracy micrometer may be used to measure and record the thickness of the substrate and the thickness of the dried negative electrode plate (coated on both sides), and then according to the formula: PD=CW×2/(thickness of electrode plate - thickness of substrate), the compacted density of the negative electrode plate can be calculated, and expressed in g/cm$^3$. The thickness can be measured with a high accuracy Micrometer from Mitutoyo, Japan.

Especially preferably, the coating areal density of the negative active material layer is in a range of from 9 mg/cm$^2$ to 15mg/cm$^2$, and the compaction density is in a range of from 1.3 g/cm$^3$ to 1.7g/cm$^3$. This can further improve the processability and energy density of the negative electrode plate, thereby obtaining a secondary battery having both excellent energy density and cycle performance.

Negative electrode current collector

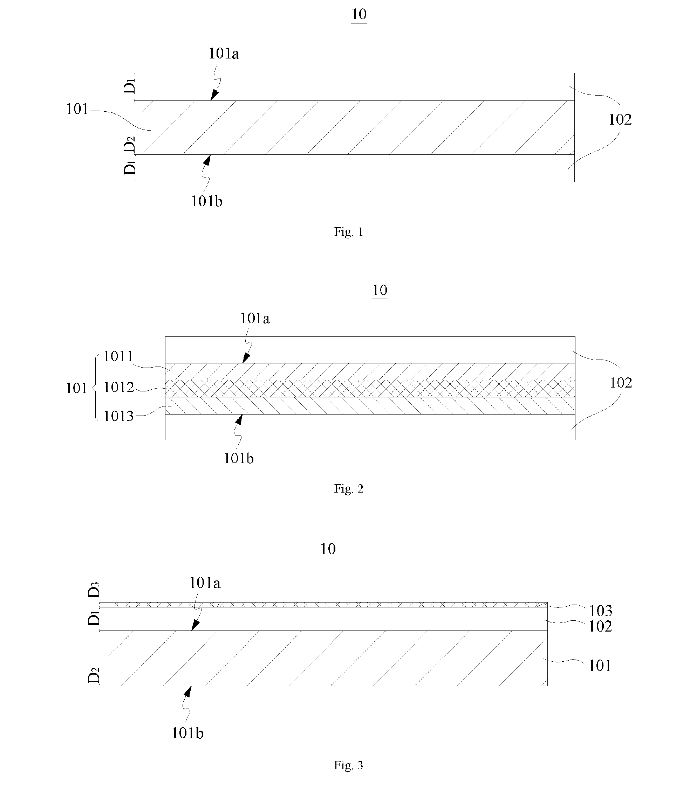

Fig. 1 is a schematic structural diagram of a composite current collector 10. Referring to Fig. 1, the current collector 10 comprises a polymer support layer 101 and a metal conductive layer 102 that are laminated and disposed. In Fig. 1, the polymer support layer 101 has a first surface 101a and a second surface 101b opposite in the thickness direction, and the metal conductive layer 102 is disposed on the first surface 101a and the second surface 101b of the polymer support layer 101.

It can be understood that the metal conductive layer 102 may also be disposed on any one of the first surface 101a and the second surface 101b of the polymer supporting layer 101. For example, the metal conductive layer 102 is disposed on the first surface 101a or 101b of the polymer support layer 101.

The polymer support layer in the composite current collector may have a single-layer structure, or a composite layer structure of two or more layers, such as two layers, three layers, four layers, and so on.

Fig. 2 is a schematic structural diagram of a composite current collector 10. Referring to Fig. 2, the polymer support layer 101 has a composite layer structure formed by laminating a first sublayer 1011, a second sublayer 1012, and a third sublayer 1013. The polymer support layer 101 in the composite layer structure has a first surface 101a and a second surface 101b that are opposite , and the metal conductive layer 102 is laminated and disposed on the first surface 101a and the second surface 101b of the polymer support layer 101. Certainly, the metal conductive layer 102 may be disposed on only the first surface 101a or the second surface 101b of the polymer support layer 101.

Compared with traditional metal current collectors such as copper foil, using the composite current collectors can increase the energy density of the battery, while maintaining good cycle performance and even further improving the cycle performance.

In this application, the brittleness parameter C of the composite current collector is:

$$C = (T_1 \times D_1)/(T_2 \times D_2) \qquad \text{Formula 1}$$

wherein $T_1$ is tensile strength of metal conductive layer, in MPa;
$D_1$ is thickness of metal conductive layer, in μm;
$T_2$ is tensile strength of polymer support layer, in MPa;
$D_2$ is the thickness of the polymer support layer, in μm.

The above formula 1 is applicable to a composite current collector provided with a metal conductive layer on at least one surface of a polymer support layer, especially applicable to a composite current collector provided with metal conductive layers on two opposite surfaces of the polymer support layer, and more especially applicable for a composite current collectors provided with metal conductive layers respectively on two opposite surfaces of the polymer support layer and having the equal or substantially equal thickness of the metal conductive layers on both sides. The aforementioned "substantially equal" means that the thickness values of the metal conductive layers on both sides do not differ by more than 10%, for example, not more than 10%, 9%, 8%, 7%, 6%, 5%, 3%, 2%, 1%. The thickness of the metal conductive layer is represented by $D_1$ in Figure 1. In some embodiments, the aforementioned "thickness of the metal conductive layer" refers to the thickness of the metal conductive layer on one side of the polymer support layer. For a composite current collector with metal conductive layers respectively on two opposite surfaces of the polymer support layer and having the equal or substantially equal thickness of the metal conductive layers on both sides, the above-mentioned "thickness of the metal conductive layer" refers to the thickness of the metal conductive layer on one side of the polymer support layer or the average thickness of the metal conductive layers on both sides of the polymer support layer. For composite current collectors with metal conductive layers respectively on two opposite surfaces of the polymer support layer in which the thickness values of the metal conductive layers on both sides differ by more than 10%, the above-mentioned "thickness of the metal conductive layer" refers to the average thickness of the metal conductive layers on both sides of the polymer support layer. In this way, formula 1 can be better applied.

The tensile strength $T_2$ of the polymer support layer 101 can be measured by instruments and methods known in the art. For example, the American INSTRON3365 universal experimental tensile machine may be used for measurement. The measurement method is as follows: at 25°C, cutting the polymer support layer into a strip sample, such as a sample with a width of 15 mm and a length of 150 mm, which is then loaded between two opposite clamps of the universal tensile tester with an initial length between the two clamps set to 50 mm; performing a tensile test at a tensile rate of 5 mm/min until the sample breaks; and recording maximum tensile force F borne when the sample breaks to calculate the tensile strength T of the polymer support layer according to $T = F/S$. In the formula, S is initial cross-sectional area of the sample. S can be calculated by the product of the width and thickness of the sample. The thickness of the sample is the thickness $D_2$ of the polymer support layer. Similarly, the above method can be used to measure the tensile strength $T_1$ of the metal conductive layer.

The thickness $D_1$ of the metal conductive layer and the thickness $D_2$ of the polymer support layer can be measured by instruments and methods known in the art, for example, by a high accuracy micrometer.

Through research, the inventors find that, the brittleness parameter C of the composite current collector is a critical parameter for the mechanics and mechanical properties of the composite current collector, which will affect the processability of the composite current collector, preparation yield of electrode plate, use reliability, etc. to a greater extent. When the brittleness parameter of the composite current collector is within the above range, the composite current collector has suitable toughness and can comprehensively exhibit higher mechanical properties, which is beneficial to improving the processability and stability of the composite current collector during long-term use. The composite negative electrode current collector with the brittleness parameter in the above range can withstand certain deformation without breaking, which is beneficial to improving the process yield of the negative electrode plate and secondary battery using the composite current collector, and improving the structural stability of the secondary battery during the long-term cycle and prolonging service life.

In some embodiments, the brittleness parameter C of the composite current collector may be from 0.03 to 0.5. Preferably, the brittleness parameter C may be from 0.08 to 0.31, and even more preferably from 0.1 to 0.25. Examples of the brittleness parameter C include 0.03, 0.05, 0.08, 0.1, 0.12, 0.15, 0,17, 0.19, 0.2, 0.22, 0.25, 0.28, 0.3, 0.32, 0.35, 0.36, 0.38, 0.4, 0.42, 0.45, 0.48, and 0.5. The range of the brittleness parameter C of the composite current collector may be a range formed by combining any of the aforementioned values as end points.

In this application, if the brittleness parameter C of the composite current collector is too low, there is a possibility that the thickness of the polymer support layer is too high or the thickness of the metal conductive layer is too low. The former is not conducive to improving the energy density of the secondary battery, while the latter will affect the current carrying capacity of the composite current collector and the negative electrode plate. Using the brittleness parameter C in the above-mentioned preferred range can not only ensure the mechanics properties of the composite current collector, but also better improve energy density of the secondary battery, and ensure that the composite current collector and the negative electrode plate have higher current carrying capacity.

In some embodiments, Young's modulus of the composite current collector is preferably E ≥ 2GPa. This makes the composite current collector have high rigidity, ensures that there will be no excessive extension or deformation during the processing of the composite current collector, improves the mechanical stability and working stability of the composite current collector, and meanwhile satisfies the requirement on good effect of the composite current collector supporting the negative electrode active material layer, thereby improving the long-term cycle performance of the secondary battery. The Young's modulus E of the composite current collector can be measured by methods known in the art. As an example, the polymer support layer is cut into a 15 mm × 200 mm sample, thickness h ($\mu$m) of the sample is measured with a high accuracy micrometer, a tensile test is performed with the Gotech tensile tester at normal temperature and pressure (25°C, 0.1 MPa) by setting an initial position such that the sample between the clamps is 50 mm long and stretching at a speed of 5 mm/min. Load L (N) from stretching to break and the clamp displacement y (mm) are recorded, then stress $\varepsilon$ (GPa) = $L/(15 \times h)$, strain $\eta$ = y/ 50. A stress-strain curve is plotted, and the initial linear region of curve is selected, the slope of which is the Young's modulus E.

Preferably, the Young's modulus E of the composite current collector is 4 GPa ≤ E ≤ 28 GPa. More preferably, the Young's modulus E of the composite current collector is in the range of from $\delta$ GPa to 20 GPa. More preferably, the Young's modulus E of the composite current collector is in the range of from 8 GPa to 16 GPa. Specifically, the Young's modulus E of the composite current collector can be 2GPa, 3GPa, 4GPa, 5GPa, 6GPa, 7GPa, 8GPa, 9GPa, 10GPa, 11GPa, 12GPa, 13GPa, 14GPa, 15GPa, 16GPa, 17GPa, 18GPa, 19GPa, 20GPa, 21GPa, 22GPa, 23GPa, 24GPa, 25GPa, 26GPa, 27GPa, or 28GPa.

In some embodiments, the tensile strength $T_1$ of the metal conductive layer is 150MPa$\leq T_1 \leq$500MPa. Preferably, the tensile strength $T_1$ of the metal conductive layer is 200MPa$\leq T_1 \leq$350MPa. By using the tensile strength of the metal conductive layer within the above range, it may be more conducive to the composite current collector having higher mechanics properties and the composite current collector is not prone to fracture or cracks, thereby improving the service life of the secondary battery; and it further ensures that the composite current collector has a good mechanics properties, mechanical properties and current collecting properties.

In some embodiments, the thickness $D_1$ of the metal conductive layer is 30nm $\leq D_1 \leq$ 3$\mu$m. In some optional embodiments, the upper limit of the thickness $D_1$ of the metal conductive layer may be selected from 3$\mu$m, 2.5$\mu$m, 2$\mu$m, 1.8$\mu$m, 1.5$\mu$m, 1.2$\mu$m, 1$\mu$m, 900nm, 750nm, 450nm, 250nm, 100nm, and the lower limit may be selected from 1.6$\mu$m, 1$\mu$m, 800nm, 600nm, 400nm, 300nm, 150nm, 100nm, 80nm, 30nm. The range of the thickness $D_1$ of the metal conductive layer can be formed by combining any of the foregoing upper limits and any lower limits, or can be formed by combining any of the foregoing upper limit and any other upper limit, or can be formed by combining any of the foregoing lower limit and any other lower limit.

Preferably, the thickness $D_1$ of the metal conductive layer is 300nm $\leq$ D1 $\leq$ 2$\mu$m. More preferably, the thickness $D_1$ of the metal conductive layer is 500nm$\leq D_1 \leq$1.5$\mu$m. More preferably, the thickness $D_1$ of the metal conductive layer is 800nm$\leq D_1 \leq$1.2$\mu$m.

Compared with traditional metal current collectors (such as copper foil, etc.), the composite current collector can have a significantly reduced weight by using a metal conductive layer with a smaller thickness, thereby helping to reduce the weight of the battery and the apparatus, so that the weight energy densities of the battery and the apparatus have been significantly improved. Moreover, by using the metal conductive layer with a thickness in the above-mentioned preferred ranges, on the one hand, it is beneficial to ensuring that the composite current collector has higher electronic conduction performance and reduces the internal direct current impedance of the secondary battery; on the other hand, it can improve the fracture toughness of the composite current collector, thereby ensuring that the negative electrode plate and the secondary battery using the composite current collector have good mechanical processing performance and structural stability.

In some embodiments, the metal conductive layer may include one or more of nickel, nickel alloy, copper, copper alloy, chromium, titanium, and silver. Preferably, the metal conductive layer may include one or more of copper and copper alloy. The copper alloy is an alloy formed by adding one or more other elements to pure copper as a matrix. Optionally, a weight ratio of nickel to copper in the nickel-copper alloy is from 1: 99 to 99: 1, such as 9: 1. Mass percentage content of copper element in the copper alloy is preferably 80wt% or more, and more preferably 90wt% or more. For example, the metal conductive layer may include copper, copper-chromium alloy, or copper-nickel alloy. In some embodiments, the tensile strength $T_2$ of the polymer support layer is preferably 100 MPa $\leq T_2 \leq$ 400 MPa, and more preferably 150 MPa $\leq T_2 \leq$ 300 MPa. For example, the tensile strength $T_2$ of the polymer support layer can be 160MPa, 200MPa, 220MPa, 250MPa or 280MPa. The tensile strength of the polymer support layer within the above range, on the one hand, it is beneficial to improving the structural strength of the composite current collector, so that the composite current collector is not easy to break during processing and cycling; on the other hand, it can control the elongation rate or deformation rate of the polymer support layer, ensures a high bonding firmness between the polymer support layer and the metal conductive layer, effectively inhibits the generation of micro-cracks in the metal conductive layer, and avoids the exfoliation of the metal conductive layer.

In some embodiments, the thickness $D_2$ of the polymer support layer of the composite current collector is 1 $\mu$m$\leq D_2 \leq$ 30 $\mu$ m. The thickness $D_2$ of the polymer support layer of 1$\mu$m or more is beneficial to leading to the polymer support layer having high mechanical strength, so that the polymer support layer is not easy to break during processing and use so as to support and protect the metal conductive layer well, thereby improving the mechanical stability and working stability of the composite current collector. The thickness $D_2$ of the polymer support layer of 30$\mu$m or less is beneficial to leading to the secondary battery having a smaller volume and a lower weight, thereby increasing the volume energy density and weight energy density of the secondary battery.

In some optional embodiments, the upper limit of the thickness $D_2$ of the polymer support layer may be selected from 30 $\mu$m, 25 $\mu$m, 20 $\mu$m, 18 $\mu$m, 15 $\mu$m, 12 $\mu$m, 10 $\mu$m, 8 $\mu$m. The lower limit value can be selected from 1 $\mu$m, 1.5 $\mu$m, 2 $\mu$m, 3 $\mu$m, 4 $\mu$m, 5 $\mu$m, 6 $\mu$m, 7 $\mu$m, 9 $\mu$m, 16 $\mu$m. The range of the thickness $D_2$ of the polymer support layer can be formed by combining any of the foregoing upper limits and any lower limits, or can be formed by combining any of the foregoing upper limit and any other upper limit, or can be formed by combining any of the foregoing lower limit and any other lower limit.

Further preferably, the thickness $D_2$ of the polymer support layer is 1nm $\leq D_2 \leq$ 20$\mu$m. More preferably, the

thickness $D_2$ of the polymer support layer 101 is $1\mu m \leq D_2 \leq 15\mu m$. More preferably, the thickness $D_2$ of the polymer support layer is $2\mu m \leq D_2 \leq 10\mu m$. More preferably, the thickness $D_2$ of the polymer support layer is $2\mu m \leq D_2 \leq 8\mu m$, more preferably $2\mu m \leq D_2 \leq \mu m$.

In composite current collector, the polymer support layer may adopt one or more of polymer materials and polymer-based composite materials. When the polymer support layer has a composite layer structure of two or more layers, materials of the sublayers may be the same or different.

Examples of polymer materials is for example one or more of polyamides, polyimides, polyesters, polyolefins, polyynes, siloxane polymers, polyethers, polyols, polysulfones, polysaccharide polymers, amino acid polymers, polysulfur nitrides, aromatic ring polymers, aromatic heterocyclic polymers, epoxy resin, phenolic resin, derivatives thereof, cross-linked products thereof, and copolymers thereof.

Further, the polymer materials may include one or more of, for example, polycaprolactam (commonly known as nylon 6), polyhexamethylene adipamide (commonly known as nylon 66), polyparaphenylene terephthalamide (PPTA), polyisophthaloyl metaphenylene diamine (PMIA), polyethylene terephthalate (PET), polybutylene terephthalate (PBT), polyethylene naphthalate (PEN), polycarbonate (PC), polyethylene (PE), polypropylene (PP), poly(propylene-co-ethylene) (PPE), polyvinyl alcohol (PVA), polystyrene (PS), polyvinyl chloride (PVC), polyvinylidene fluoride (PVDF), polytetrafluoroethylene (PTEE), poly(sodium styrene sulfonate) (PSS), polyacetylene (PA), silicone rubber, polyoxymethylene (POM), polyphenylene ether (PPO), polyphenylene sulfide (PPS), polyethylene glycol (PEG), cellulose, polyphenylene, polypyrrole (PPy), polyaniline (PAN), polythiophene (PT), polypyridine (PPY), acrylonitrile-butadiene-styrene copolymer (ABS), polyimide (PI), derivatives thereof, cross-linked products thereof, and copolymers thereof.

More further, the above-mentioned polymer material is selected from one or more of polyethylene terephthalate (PET), polybutylene terephthalate (PBT), polyethylene naphthalate (PEN), poly(sodium styrene sulfonate) (PSS), polypropylene (PP) and polyimide (PI). More preferably, the above-mentioned polymer material is polyethylene terephthalate (PET) or polypropylene (PP). In some preferred embodiments, the polymer material is polyethylene terephthalate (PET). In some preferred embodiments, the polymer material is polypropylene (PP).

Examples of the above-mentioned polymer-based composite material may include the above-mentioned polymer materials and additives. The additives may be one or more of metal materials and inorganic non-metallic materials. The above-mentioned metal material as the additives may be one or more of copper, copper alloy, nickel, nickel alloy, titanium, titanium alloy, iron, iron alloy, silver, and silver alloy.

The above-mentioned inorganic non-metallic material as additives may be, for example, one or more of carbon-based materials, alumina, silicon dioxide, silicon nitride, silicon carbide, boron nitride, silicate, and titanium oxide, and for example, one or more of glass materials, ceramics materials and ceramic composite materials. The carbon-based material additives are, for example, one or more of graphite, superconducting carbon, acetylene black, carbon black, Ketjen black, carbon dots, carbon nanotubes, graphene, and carbon nanofibers.

The above-mentioned additives may be metal-coated carbon-based materials, such as one or more of nickel-coated graphite powder and nickel-coated carbon fibers.

In some embodiments, the composite current collector further optionally includes a protective layer 103. Referring to Fig. 3 to Fig. 5, the metal conductive layer 102 has two opposite surfaces in its thickness direction. The protective layer(s) 103 is/are laminated and disposed on any one or both of the two surfaces of the metal conductive layer 102, to protect the metal conductive layer 102, prevent the metal conductive layer 102 from chemical corrosion or mechanical damage, and ensure the working stability and service life of the composite current collector 10, which is beneficial to enabling the secondary battery to have relatively high safety performance and electrochemical performance. In addition, the protective layer 103 can also increase the strength of the composite current collector 10. It can be understood that Figs. 3 to 5 show that there is a metal conductive layer 102 on single side of the polymer support layer 101 and there is/are protective layer(s) 103 on one or both of two opposite surfaces in the thickness direction of the metal conductive layer 102. However, in other embodiments, the metal conductive layer 102 may be respectively disposed on two opposite surfaces of the support layer 101; the protective layer(s) 103 may be disposed on one or both of two opposite surfaces of any one of metal conductive layers 102 in thickness direction, or the protective layers 103 may be disposed on one or both of two opposite surfaces of two metal conductive layers 102 in thickness direction.

The protective layer may include one or more of metal, metal oxide, and conductive carbon. Preferably, the material of the protective layer is different from the material of the metal conductive layer.

The above-mentioned metal may be one or more of nickel, chromium, nickel alloy, and copper alloy. The nickel alloy is an alloy formed by adding one or more other elements to pure nickel as a matrix, and is preferably a nickel-chromium alloy. The nickel-chromium alloy is an alloy formed of metallic nickel and metallic chromium. Optionally, a weight ratio of nickel to chromium in the nickel-chromium alloy is from 1: 99 to 99: 1, such as 9: 1. The copper alloy is an alloy formed by adding one or more other elements to pure copper as a matrix, and is preferably a nickel-copper alloy. Optionally, a weight ratio of nickel to copper in the nickel-copper alloy is from 1: 99 to 99: 1, such as 9: 1.

The metal oxide is for example one or more of copper oxide, aluminum oxide, cobalt oxide, chromium oxide, and nickel oxide. In some preferred embodiments, the protective layer includes nickel oxide or copper oxide.

The conductive carbon is for example one or more of graphite, superconducting carbon, acetylene black, carbon black, Ketjen black, carbon dots, carbon nanotubes, graphene and carbon nanofibers, and further include one or more of carbon black, carbon nanotubes, acetylene black, and graphene.

As some examples, referring to Fig. 3, the composite current collector 10 includes a polymer support layer 101, a metal conductive layer 102 and a protective layer 103 that are laminated. The polymer support layer 101 has a first surface 101a and a second surface 101b opposite in its thickness direction, the metal conductive layer 102 is laminated and disposed on at least one of the first surface 101a and the second surface 101b of the polymer support layer 101, and the protective layer 103 is laminated and disposed on a surface of the aluminum-based conductive layer 102 facing away from the polymer support layer 101. The protective layer 103 disposed on the surface of the metal conductive layer 102 facing away from the polymer support layer 101 (referred to as an upper protective layer for short) protects the metal conductive layer 102 from chemical corrosion and mechanical damage, and can also improve the interface between the composite current collector 10 and the negative electrode active material layer 20 and improve the binding force between the composite current collector 10 and the negative active material layer 20.

In some embodiments, the upper protective layer of the composite current collector 10 may be a metal oxide protective layer, such as copper oxide, cobalt oxide, nickel oxide, chromium oxide, etc. The metal oxide protective layer has high hardness and mechanical strength, a larger specific surface area, and better corrosion resistance, and can better protect the metal conductive layer 102.

The upper protective layer of the composite current collector 10 is preferably a multilayer protective layer, that is, a composite layer formed of at least one metal protective layer and at least one metal oxide protective layer. Preferably, the metal protective layer is disposed on a surface of the metal conductive layer 102 facing away from the polymer support layer 101, the metal oxide protective layer is disposed on a surface of the metal protective layer facing away from the polymer support layer 101, which can improve the conductivity and corrosion resistance of the composite current collector 10 as well as the interface between the metal conductive layer 102 and the negative electrode active material layer 20 at the same time, and can obtain a composite current collector with better overall performance. As some other examples, referring to Fig. 4, the composite current collector 10 includes a polymer support layer 101, a metal conductive layer 102 and a protective layer 103 that are laminated. The polymer support layer 101 has a first surface 101a and a second surface 101b opposite in its thickness direction, the metal conductive layer 102 is laminated and disposed on at least one of the first surface 101a and the second surface 101b of the polymer support layer 101, and the protective layer 103 is laminated and disposed on a surface of the metal conductive layer 102 facing the polymer support layer 101. With the protective layer 103 disposed on the surface of the metal conductive layer 102 facing the polymer support layer 101 (referred to as the lower protective layer for short), the lower protective layer protects the metal conductive layer 102 from chemical corrosion and mechanical damage, and meanwhile can also improve the bonding force between the metal conductive layer 102 and the polymer support layer 101, so as to prevent the metal conductive layer 102 from being separated from the polymer support layer 101, and improve the supporting and protection effect of the metal conductive layer 102.

Optionally, the lower protective layer is a metal oxide or metal protective layer. The metal oxide protective layer has relatively high corrosion resistance and large specific surface area, which can further improve the interface bonding force between the metal conductive layer 102 and the polymer support layer 101, so that the lower protective layer can better protect the metal conductive layer 102 to improve the performance of the lithium-ion secondary battery. The metal oxide protective layer has higher hardness and better mechanical strength, which is more conducive to improving the strength of the composite current collector 10.

As still other examples, referring to Fig. 5, the composite current collector 10 includes a polymer support layer 101, a metal conductive layer 102 and a protective layer 103 that are laminated. The polymer support layer 101 has a first surface 101a and a second surface 101b opposite in its thickness direction, the metal conductive layer 102 is laminated and disposed on at least one of the first surface 101a and the second surface 101b of the polymer support layer 101, and the protective layers 103 are laminated and disposed on a surface of the metal conductive layer 102 facing away from the polymer support layer 101 and a surface of the metal conductive layer 102 facing the polymer support layer 101. The protective layer 103 is disposed on both surfaces of the metal conductive layer 102 to more fully protect the metal conductive layer 102, so that the composite current collector 10 has relatively high comprehensive performance. It can be understood that the protective layers on the two surfaces of the metal conductive layer may be made of the same or different materials, and may have the same or different thicknesses.

Preferably, the thickness $D_3$ of the protective layer is $1nm \leq D_3 \leq 20nm$, and $D_3 \leq 0.1D1$. Further preferably, $D_3 \leq 0.05D_1$. If the protective layer is too thin, it will not sufficient to protect the metal conductive layer; if it is too thick, it will reduce the energy density of the secondary battery.

In some embodiments, the upper limit of the thickness $D_3$ of the protective layer may be 200nm, 180nm, 150nm, 120nm, 300mn, 80nm, 60nm, 55nm, 50nm, 45nm, 40nm, 30nm and 20nm, and the lower limit value may be 1nm, 2nm, 5nm, 8nm, 10nm, 12nm, 15nm and 18nm. The range of the thickness $D_3$ of the protective layer can be formed by combining any of the foregoing upper limits and any lower limits, or can be formed by combining any of the foregoing upper limit and any other upper limit, or can be formed by combining any of the foregoing lower limit and any other lower limit.

Preferably, the thickness $D_3$ of the protective layer is $5nm \leq D_3 \leq 200nm$. and more preferably $8nm \leq D_3 \leq 20nm$.

The "thickness $D_1$ of the protective layer" refers to the thickness of the protective layer on a single side of the metal conductive layer. In other words. when the composite current collector includes an upper protective layer, the thickness $D_a$ of the upper protective layer is $1nm \leq D_a \leq 200nm$ and $D_a \leq 0.1D_1$: Further. $5nm \leq D_a \leq 200nm$: furthermore. $8nm \leq D_a \leq 20nm$. When the composite collector includes a lower protective layer. the thickness $D_b$ of the lower protective layer is $1nm \leq D_b \leq 200nm$ and $D_b \leq 0.1D_1$: Further. $5nm \leq D_b \leq 200nm$; furthermore. $8nm \leq D_b \leq 20nm$.

When protective layers are disposed on both surfaces of the metal conductive layer, that is, when the composite current collector 10 includes an upper protective layer and a lower protective layer, preferably, $D_a < 1.5D_b$. When the thickness values of the upper protective layer and the lower protective layer meet the above relationship, it is beneficial for the upper protective layer and the lower protective layer to cooperate with the metal conductive layer to provide a good protective effect against chemical corrosion and mechanical damage, and at the same time provide the secondary battery having a higher energy density. More preferably. $0.5D_b \leq D_a \leq 1.2D_b$, which can better provide a synergistic protective effect of the upper protective layer and the lower protective layer. Especially preferably, $D_a$ basically equals to $D_b$.

It can be understood that the influence of the setting of the protective layer on the brittleness parameter C of the composite current collector is negligible.

In the current collector of an embodiment of the present application, the metal conductive layer can be formed on the polymer support layer by at least one of mechanical rolling, bonding, vapor deposition method, chemical plating method, or electroplating method. Preferably, vapor deposition method and electroplating method are used. In other words, the metal conductive layer is a vapor deposition layer or an electroplating layer. The metal conductive layer is formed on the polymer support layer by means of vapor deposition or electroplating, which is beneficial to providing relatively high bonding force between the metal conductive layer and the polymer support layer, thereby improving the performance of the composite current collector.

The vapor deposition is preferably physical vapor deposition. The physical vapor deposition is preferably at least one of evaporation and sputtering, wherein the evaporation is preferably at least one of vacuum evaporation, thermal evaporation and electron beam evaporation, and the sputtering is preferably magnetron sputtering.

As an example, the metal conductive layer is formed by a vacuum evaporation. The vacuum evaporation includes: placing the support layer after surface cleaning treatment in a vacuum evaporation chamber, melting and evaporating a metal wire in the metal evaporation chamber at a high temperature from 1300°C to 2000°C, and allowing the evaporated metal to pass through a cooling system in a vacuum evaporation chamber and finally depositing it on the polymer support layer to form the metal conductive layer.

When a protective layer exists, the protective layer can be formed on the metal conductive layer by at least one of vapor deposition, in-situ formation and coating. The vapor deposition may be the aforementioned vapor deposition. The in-situ formation is preferably in-situ passivation, that is, a method of forming a metal oxide passivation layer in situ on a metal surface. The coating is preferably at least one of roll coating, extrusion coating, knife coating, and gravure coating.

Preferably, the protective layer is formed on the metal conductive layer by at least one of a vapor deposition method and an in-situ formation method, which is beneficial to providing higher bonding force between the metal conductive layer and the protective layer, thereby better performing the protecting effects of the protective layer on the composite current collector and ensuring the working performance of the composite current collector.

When the protective layer (that is, the lower protective layer) is disposed between the metal conductive layer and the polymer support layer, the lower protective layer may be formed on the polymer support layer first, and then the metal conductive layer may formed on the lower protective layer. The lower protective layer may be formed on the polymer support layer by at least one of vapor deposition and coating, and preferably by vapor deposition. The metal conductive layer may be formed on the lower protective layer by at least one of mechanical rolling, bonding, vapor deposition and chemical plating, and preferably by vapor deposition.

In the present application, the negative electrode active material layer may also comprise a conductive agent. There is no limitation on the type of the conductive agent in the application. As an example, the conductive agent is one or more of graphite, superconducting carbon, acetylene black, carbon black, Ketjen black, carbon dots, carbon nanotubes, graphene, and carbon nanofibers.

In some embodiments, the negative electrode active material layer may further include a binder. There is no limitation on the type of the binder in the present application. As an example, the binder is one or more of styrene-butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA), and polyvinyl butyral (PVB).

The negative electrode plate can be prepared according to a conventional method in the art, such as a coating method. As an example, the negative electrode active material and optional conductive agent and binder are dispersed in a solvent which may be NMP or deionized water to form a uniform negative electrode slurry; the negative electrode slurry is applied on the composite current collector, and the negative electrode plate is obtained after procedures including drying and the like.

[Positive electrode plate]

In some embodiments, the positive electrode plate includes a positive electrode current collector and a positive electrode active material layer disposed on the positive electrode current collector. For example, the positive current collector has two opposite surfaces in its own thickness direction, and the positive electrode active material layer is disposed on either or both of the two opposite surfaces.

The positive electrode active material layer may adopt a positive electrode active material known in the art that can achieve reversible intercalation/deintercalation of active ions, which is not limited in this application.

For example, the positive electrode active material for lithium-ion secondary batteries may be one or more of lithium transition metal composite oxides, and composite oxides obtained by adding other transition metals or non-transition metals or non-metals to lithium transition metal composite oxides. The transition metal can be one or more of Mn, Fe, Ni, Co, Cr, Ti, Zn, V, Al, Zr, Ce, and Mg.

As an example, the positive electrode active material may be selected from one or more of lithium cobalt oxide, lithium nickel oxide, lithium manganese oxide, lithium nickel manganese oxide, lithium nickel cobalt manganese oxide, lithium nickel cobalt aluminum oxide, and lithium-containing phosphate of an olivine structure. For example, the lithium transition metal composite oxide is one or more of $LiMn_2O_4$, $LiNiO_2$, $LiCoO_2$, $LiNi_{1-y}Co_yO_2$ ($0 <y<1$), $LiNi_aCo_bAl_{1-a-b}O_2$ ($0 <a<1$, $0<b<1$, $0<a+b<1$), $LiMn_{1-m-n}Ni_mCo_nO_2$ ($0 <m<1$, $0<n<1$, $0<m+n <1$), $LiMPO_4$ (M can be one or more of Fe, Mn, Co) and $Li_3V_2(PO_4)_3$. In some embodiments, the positive electrode active material may be selected from one or more of $LiCoO_2$, $LiNiO_2$, $LiMn_2O_4$, $LiFePO_4$, lithium nickel cobalt manganese oxide and lithium nickel manganese oxide. In a preferred embodiment, the positive electrode active material is one or more of $LiNi_{0.8}Co_{0.1}Mn_{0.1}O_2$ (Hereinafter may be referred to as NCM811), $LiFePO_4$ and lithium nickel manganese oxide. More preferably, the positive electrode active material is $LiNi_{0.8}Co_{0.5}Mn_{0.1}O_2$.

Optionally, the positive electrode active material layer may further include a binder. There is no limitation on the type of the binder in the present application. As an example, the binder is one or more of styrene-butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA), and polyvinyl butyral (PVB). Optionally, the positive electrode active material layer may also comprise a conductive agent. There is no limitation on the type of the conductive agent in the application. As an example, the conductive agent is one or more of graphite, superconducting carbon, acetylene black, carbon black, Ketjen black, carbon dots, carbon nanotubes, graphene, and carbon nanofibers.

The positive electrode plate can be prepared according to a conventional method in the art, such as a coating method. As an example, the positive electrode active material and optional conductive agent and binder are dispersed in a solvent which may be N-methylpyrrolidone (NMP) to form a uniform positive electrode slurry; the positive electrode slurry is applied on the positive electrode current collector, and the positive electrode plate is obtained after procedures including drying and the like.

The positive electrode current collector can adopt one or more of aluminum, aluminum alloy, nickel, nickel alloy, titanium and silver, such as one or more of aluminum and aluminum alloy. The mass percentage of aluminum element in the foregoing aluminum alloy is preferably 80 wt% or more, and more preferably 90 wt%.

[Electrolyte]

In the secondary battery of the present application, the electrolyte may be a solid electrolyte or a non-aqueous electrolyte. For example, an electrolyte is formed by dispersing an electrolyte salt in an organic solvent.

In the electrolyte, the organic solvent serves as a medium to transport ions in electrochemical reaction, and may adopt any organic solvent in the art. As a source of ions, the electrolyte salt may be any electrolyte salt in the art.

For example, the organic solvent for lithium-ion secondary batteries may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

For example, the electrolyte salt for lithium-ion secondary batteries may be one or more of lithium hexafluoro-phosphate ($LiPF_6$), lithium tetrafluoroborate ($LiC3F_4$), lithium perchlorate ($LiClO_4$), lithium hexafluoroarsenate $LiAsF_6$), lithium difluorosulfimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate ($LiPO_2F_2$), lithium difluoro-

bisoxalate phosphate (LiDFOP), and lithium tetrafluorooxalate phosphate (LiTFOP).

The electrolyte may further optionally include additives. The type of additives is not specifically limited, and may be selected according to requirements. For example, the additive may comprise a negative electrode film-forming additive, a positive electrode film-forming additive, and also additives capable of improving certain performance of the battery, such as an additive that improves overcharge performance of the battery, an additives that improve high-temperature performance of the battery, and an additive that improves low-temperature performance of the battery.

As an example, the additives may be one or more of vinylene carbonate (VC), vinyl ethylene carbonate (VEC), fluoroethylene carbonate (FEC), succinonitrile (SN), adiponitrile (ADN), 1,3-propylene sultone (PST), tris(trimethylsilane) phosphate (TMSP), and tris(trimethylsilane) borate (TMSB).

When the secondary battery adopts the electrolyte, a separator is disposed between the positive electrode plate and the negative electrode plate for separation. The type of separator is not specially limited, and the separator may be any known porous separator with good chemical and mechanical stability, such as one or more of glass fiber, non-woven fabric, polyethylene, polypropylene, and polyvinylidene fluoride. The separator can be a single-layer film or a multilayer composite film. When the separator is a multilayer composite film, the materials of each layer may be the same or different.

The above-mentioned positive electrode plate, separator, and negative electrode plate are stacked in order, so that the separator is disposed between the positive electrode plate and the negative electrode plate for isolation, thereby obtaining an electrode assembly, or they can be wound to obtain an electrode assembly. The electrode assembly is placed in a packaging case in which an electrolyte is subsequently injected and then the packaging case is sealed to obtain a secondary battery.

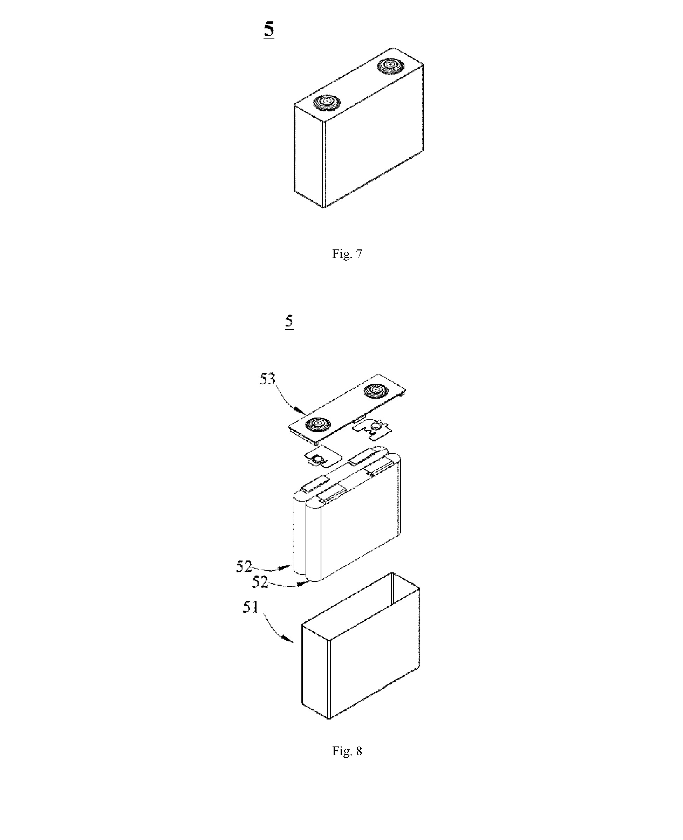

In a particular embodiment of the present application, the secondary battery is a lithium-ion battery. Fig. 7 is a stereogram of an embodiment of a lithium-ion battery 5. Fig. 8 is an exploded view of Fig. 7. Referring to Fig. 7 to Fig. 8, the lithium ion battery 5 includes a housing 51, an electrode assembly 52, a top cover assembly 53, and an electrolyte (not shown).

The electrode assembly 52 is accommodated in the housing 51. The number of electrode assemblies 52 is not limited, and may be one or more. The electrode assembly 52 includes a positive electrode plate, a negative electrode plate, and a separator. The separator separates the positive electrode plate and the negative electrode plate. The electrolyte is injected into the housing 51 and impregnates the electrode assembly 52, which includes for example a positive electrode plate, a negative electrode plate, and a separator.

It is noted that the lithium-ion battery 5 shown in Fig. 7 is a can type battery, but is not limited to this. The lithium ion battery 5 may be a pouch type battery, in which the casing 51 is replaced by a metal plastic film and the top cover assembly 53 is eliminated.

Next, the battery module of another aspect of the present application will be illustrated.

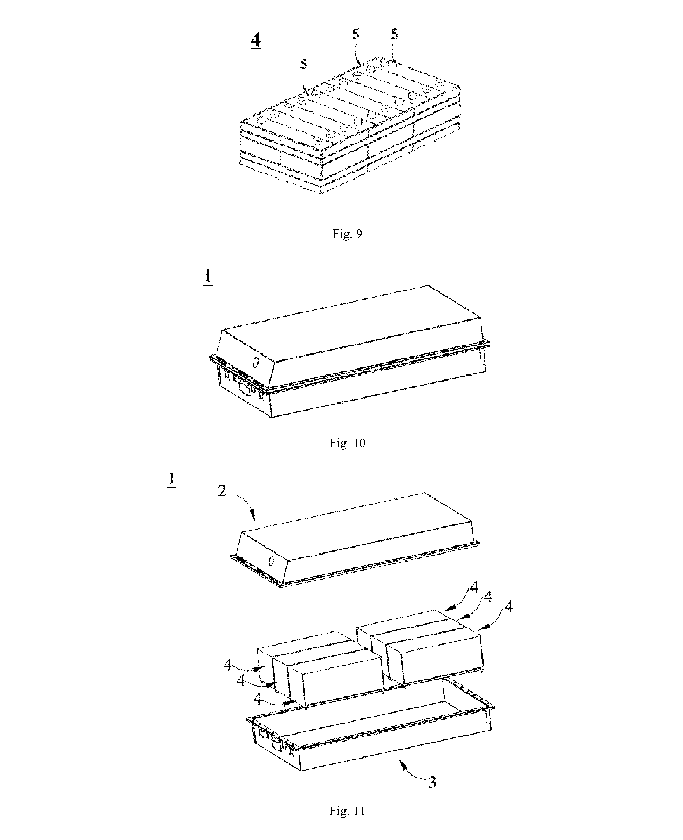

Fig. 9 is a stereogram of an embodiment of a battery module 4.

The battery module 4 provided by embodiments of the present application comprises the lithium-ion battery 5 of the present application.

Referring to Fig. 9, the battery module 4 includes a plurality of batteries 5. A plurality of lithium ion batteries 5 are arranged in the longitudinal direction. The battery module 4 can be used as a power source or an energy storage device. The number of the lithium-ion batteries 5 in the battery module 4 may be adjusted according to the application and capacity of the battery module 4.

Next, the battery pack of another aspect of the present application will be illustrated.

Fig. 10 is a stereogram of an embodiment of a battery pack 1. Fig. 11 is an exploded view of Fig. 10.

The battery pack 1 provided by the present application comprises the battery module 4 according to an embodiment of the present application.

In particular, referring to Figs. 10 and 11, the battery pack 1 comprises an upper case body 2 and a lower case body 3 and the battery modules 4. The upper case body 2 and the lower case body 3 are assembled together to form a space for accommodating the battery module 4. The battery module 4 is placed in the space formed by assembling the upper case body 2 and the lower case body 3 together. The output electrode of the battery module 4 passes through one of or between the upper case body 2 and the lower case body 3, to supply power to the outside or charge from the outside. The number and arrangement of the battery modules 4 used in the battery pack 1 can be determined according to actual needs.

**Apparatus**

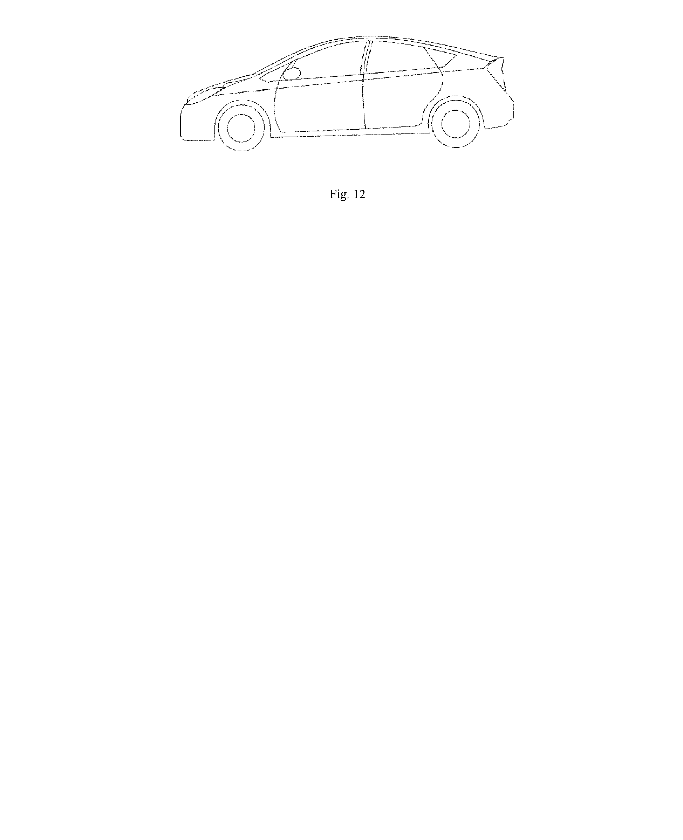

Fig. 12 is a schematic diagram of an embodiment of an apparatus in which a lithium-ion battery is used as a power source.

The apparatus provided by the present application comprises the lithium-ion battery 5 according to an embodiment of the present application, wherein the lithium-ion battery 5 may be used as a power source for the apparatus or an energy storage unit for the apparatus. In Fig. 12, the apparatus using the lithium-ion battery 5 is an electric vehicle. Certainly, the apparatus is not limited to this. The apparatus using the lithium-ion battery 5 can also be any electric vehicle other than electric vehicles (such as electric buses, electric trams, electric bicycles, electric motorcycles, electric scooters, electric golf carts, electric trucks), electric ships, electric tools, electronic devices and energy storage systems. The electric vehicle may be a pure electric vehicle, a hybrid electric vehicle, or a plug-in hybrid electric vehicle. Certainly, according to the actual use form, the apparatus provided in this application may include the battery module 4 described in this application, or certainly, the apparatus provided in this application may include the battery pack 1 described in this application.

Those skilled in the art can understand that in the above-mentioned different embodiments of the application, the limitations or preferred ranges regarding selection of components, the content of components, and the physical and chemical properties of the materials (thickness, brittleness parameters, tensile strength, elongation at break, etc.) can be combined arbitrarily, and various embodiments obtained by the combinations are still within the scope of the present application and are regarded as part of the disclosure of this specification.

The following examples further illustrate the beneficial effects of the present application.

## Examples

The following examples are intended to describe the present application more specifically, merely for the purpose of illustration. Various modifications and variations within the scope of the present application are apparent to those skilled in the related art. Unless otherwise stated, all parts, percentages, and ratios described in the following embodiments are based on weight, and all reagents used in the embodiments are commercially available or synthesized according to conventional methods and can be directly used without further treatment, and all instruments used in the embodiments are commercially available.

1. Preparation process

Preparation of composite current collector

A polymer support layer with a predetermined thickness was selected and subjected to surface cleaning treatment, the polymer support layer after the surface cleaning treatment was placed in a vacuum evaporation chamber, then a high-purity copper wire in the metal evaporation chamber was melted and evaporated at a high temperature from 1300°C to 2000°C, and the evaporated metal passed through a cooling system in the vacuum evaporation chamber and was finally deposited on two surfaces of the support layer to form a metal conductive layers.

Preparation of conventional composite current collector

A copper foil with a thickness of 6.5 $\mu$m was used.

Preparation of negative electrode plate

Mixture of artificial graphite material and silicon monoxide as negative electrode active material, CMC/SBR as a binder and a conductive carbon black as conductive agent were added in a weight ratio of 92.5:6:1.5 into deionized water, and stirred with a mixer (the speed is not less than 1500 rpm), to form a uniform negative electrode slurry (having a viscosity of not less than 1000 mPa·s). The negative electrode slurry was applied on the composite current collector, and after procedures including drying, a negative electrode plate was obtained. The weight ratio of silicon monoxide in the negative electrode active material layer was shown in Tables 2 to 5.

Preparation of conventional positive electrode current collector

An aluminum foil with a thickness of 12 $\mu$m was used.

Preparation of conventional positive electrode plate

$LiNi_{0.8}Co_{0.3}Mn_{0.1}O_2$ as positive electrode active material, carbon black as a conductive agent, and polyvinylidene fluoride (PVDF) as a binder were mixed uniformly at a weight ratio of 97:2:1 in N-methylpyrrolidone (NMP) to form a positive electrode slurry; the positive electrode slurry was applied on a positive electrode current collector, and a positive electrode plate was obtained after procedures including drying.

Preparation of electrolyte

Ethylene carbonate (EC) and ethyl methyl carbonate (EMC) at a volume ratio of 3:7 were mixed uniformly to obtain an organic solvent, and then 1 mol/L $LiPF_6$ was uniformly dissolved in the organic solvent.

Preparation of lithium-ion secondary battery

The positive electrode plate, a separator PP. and the negative electrode plate were laminated in sequence, and after winding, welding, shelling, packaging, liquid injection, and formation, a lithium ion secondary battery was obtained.

2. Performance test

(I) Test of brittleness parameter C of the composite current collector

The polymer support layer was cut into a sample with a width of 15 mm and a length of 150 mm which was then loaded between an upper clamp and a lower clamp of American INSTRON 3365 universal tensile tester with an initial length set to 50 mm, and then a tensile test was performed at a tensile rate of 5 mm/min until the sample broke. Maximum tensile force $F_2$ when the sample broke was recorded. Tensile strength $T_2$ of the polymer support layer was calculated according to $T_2 = F_2/S_2$. $S_2$ was initial cross-sectional area of the sample, which was equal to the product of the width and thickness of the sample (i.e., the thickness $D_2$ of the polymer support layer).
Similarly, tensile strength $T_1$ of the metal conductive layer was measured. When a separate conductive layer cannot be obtained (for example, when it is not easy to peel the conductive layer from the current collector), the tensile strength $T_1$ of the metal conductive layer can be regarded as 300 MPa.
The thickness $D_1$ of the metal conductive layer and the thickness $D_2$ of the polymer support layer were measured by a high accuracy micrometer, and expressed in $\mu$m. 10 different positions were tested and the average value was taken. The brittleness parameter C of the composite current collector = (the tensile strength $T_1$ of the metal conductive layer $\times$ the thickness $D_1$ of the aluminum-based conductive layer)/ (the tensile strength $T_2$ of the support layer $\times$ the thickness $D_2$ of the support layer).

(2) Coating areal density (CW)

The coating areal density was calculated by measuring the weight of the dried coating per unit area. Specifically, in the examples, an electrode plate coated on both sides was punched into a small disc having an area of 100 $mm^2$, the small disc was dried at 120 degrees Celsius, and weighed as "weight of coated electrode plate"; and uncoated current collector of 100$mm^2$ was weighed to obtain "weight of substrate". Therefore, the coating areal density was calculated by the formula:

$$CW = (\text{weight of coated electrode plate} - \text{weight of substrate})/(2 \times 100).$$

The coating areal density was expressed in mg/$cm^2$. A Sartorius balance was used as electronic balance for weighing.

(3) Compacted density (PD)

A high accuracy micrometer was used to measure and record the thickness of substrate and the thickness of the cold-pressed electrode plate (coated on both sides), and the compacted density was then calculated according to the formula: PD=CW$\times$2/(thickness of cold-pressed electrode plate - thickness of substrate).
Compacted density was expressed in g/$cm^3$. The thickness was measured with a high accuracy Micrometer from Mitutoyo, Japan.

(4) Test methods for electrode assembly

Number of cycles at 25°C; At 25°C, an electrode assembly was charged to 4.20V at a constant current of 0.3C, then charged to 0.05C at a constant voltage of 4.20V, and let stand for half an hour to obtain the first charge capacity; discharged at a constant current of 0.3C to 2.5V, let stand for another half an hour to obtain the first discharge capacity. This was a cyclic charging and discharging process. Then this process was repeated until the discharge capacity of the electrode assembly in the nth cycle being 80% of the discharge capacity of the first cycle. Cycle life was characterized by the number of cycles when the capacity of electrode assembly reached 80% of the first discharge capacity. Specifically, during cycle process, the charge and discharge capacity data of the electrode assembly in different cycles were sequentially recorded, and the discharge capacity of the first cycle was denoted as $c_1$, the discharge capacity of the second cycle is denoted as $c_2$ ... and so on. When $c_n/c_1 \times 100\% < 80\%$, the cycle process stopped, and the value of n was the number of cycles corresponding to the capacity maintaining 80%.

Energy density (ED)= Capacity $\times$ average voltage/electrode assembly mass: Calculation of energy density of electrode assembly. The electrode assembly was charged at 0.3C to 4.2 V, the capacity and average voltage were recorded. The energy density was expressed in Wh/kg. The weight of the electrode assembly was obtained by weighing with Sartorius balance.

(5) Evaluation method for the frequency of strip breaking in cold pressing (times/km)

A current collector was made into a negative electrode plate through the coating process. The process yield was evaluated by recording the frequency of strip breaking in cold pressing stage. The compacted density of the electrode plate in cold pressing was set to 3.5g/cm$^3$, the speeding for cold pressing was 40m/min, and the cold pressing was carried out for a length of greater than or equal to 10 kilometers. The number of electrode plate breaking during the entire cold pressing process was recorded. The frequency of strip breaking in cold pressing was calculated as follows: Frequency of strip breaking in cold pressing = number of strip breaking in cold pressing/meters of cold-pressed strip.

(6) Test of Young's modulus E

A current collector was cut into a 15 mm $\times$ 200 mm sample, and thickness h ($\mu$m) of the sample was measured with a high accuracy micrometer. A tensile test was performed with Gotech tensile tester at normal temperature and pressure (25°C, 0.1 MPa) by setting an initial position such that the sample between the clamps was 50 mm long and stretching at a speed of 5 mm/min. The load L (N) from stretching to break and the clamp displacement y (mm) were recorded, then stress $\varepsilon$ (GPa) = L/(15 $\times$ h), strain $\eta$ = y/50. A stress-strain curve was plotted, and the initial linear region of curve was selected, the slope of which was the Young's modulus E expressed in GPa.

Experiment 1. Properties of composite current collector

According to the methods described herein, the current collectors shown in Table 1 below were prepared, and the properties were tested.

Table 1. Composition and properties of current collectors

| Number of current collector | Polymer support layer | | | Metal conductive layer | | | Upper protective layer | | Lower protective layer | | Brittleness parameter C | Young's modulus E (GPa) |
|---|---|---|---|---|---|---|---|---|---|---|---|---|
| | Material | Thickness $D_2$ ($\mu$m) | Tensile strength $T_2$ (MPa) | Material | Thickness $D_1$ ($\mu$m) | Tensile strength $T_1$ (MPa) | Material | Thickness (nm) | Material | Thickness (nm) | | |
| 1 | PET | 1 | 150 | Cu | 0.03 | 150 | / | / | / | / | 0.03 | 4 |
| 2 | PET | 6 | 200 | Cu | 0.5 | 200 | / | / | / | / | 0.08 | 8 |
| 3 | PP | 6 | 160 | Cu | 0.5 | 200 | / | / | / | / | 0.10 | 7 |
| 4 | PET | 2 | 200 | Cu | 0.3 | 200 | / | / | / | / | 0.15 | 6 |
| 5 | PET | 10 | 200 | Cu/Cr | 2.0 | 200 | / | / | / | / | 0.20 | 16 |
| 6 | PET | 8 | 300 | Cu | 1.5 | 350 | / | / | / | / | 0.22 | 14 |
| 7 | PET | 13 | 220 | Cu/Ni | 2.2 | 400 | / | / | / | / | 0.31 | 20 |
| 8 | PET | 15 | 230 | Cu/Ni | 4.2 | 400 | / | / | / | / | 0.49 | 24 |
| 9 | PP | 6 | 160 | Cu | 0.5 | 200 | Nickel oxide | 10 | / | / | 0.10 | 7 |
| 10 | PP | 6 | 160 | Cu | 0.5 | 200 | / | / | Copper oxide | 8 | 0.10 | 7 |
| 11 | PP | 6 | 160 | Cu | 0.5 | 200 | Nickel oxide | 10 | Copper oxide | 10 | 0.10 | 7 |
| 12 | PP | 6 | 160 | Cu | 0.5 | 200 | Nickel oxide | 5 | Copper oxide | 10 | 0.10 | 7 |
| 13 | PP | 6 | 160 | Cu | 0.5 | 200 | Nickel oxide | 12 | Copper oxide | 10 | 0.10 | 7 |
| 14 | PET | 3 | 350 | Cu | 2.0 | 350 | / | / | / | / | 0.67 | 28 |
| 15 | PET | 12 | 230 | Cu | 0.15 | 180 | / | / | / | / | 0.01 | 4 |
| 16 | - | - | - | Cu | 6.5 | 350 | / | / | / | / | / | 50 |

* Current collectors 14 and 15 are not a part of the claimed invention.

EP 3 975 298 B1

In Table 1, current collector 16 was a traditional copper-based current collector, and the remaining current collectors were composite current collectors.

Experiment 2. Influence of brittleness parameter and content of silicon-based active material on processing technology (frequency of strip breaking in cold-pressing) and battery performance

Current collectors with different values of brittleness parameter and negative electrode active material layers with different Si contents were combined, followed by measurement of performance of the resulting batteries. In experiment 2, all of silicon-based materials had a volume average particle size $D_v50$ of 6$\mu$m, CW of 10 mg/cm$^2$, and PD of 1.5g/cm$^3$. The results were shown in Table 2 below.

Table 2 Influence of brittleness parameter and silicon-based active material content

| Example | Number of current collector | Brittleness parameter C | Mass percentage of silicon-based materials in the negative electrode active material layer (wt%) | Frequency of strip breaking in cold pressing (Times/km) | Number of cycles | Energy Density (Wh/kg) |
|---|---|---|---|---|---|---|
| I | 1 | 0.03 | 30 | 1.7 | 830 | 276 |
| 2 | 2 | 0.08 | 30 | 0.6 | 850 | 268 |
| 3 | 3 | 0.10 | 30 | 0.3 | 870 | 269 |
| 4 | 4 | 0.15 | 30 | 0.2 | 950 | 272 |
| 5 | 5 | 0.20 | 30 | 0 | 990 | 258 |
| 6 | 6 | 0.22 | 30 | 0.1 | 970 | 261 |
| 7 | 7 | 0.30 | 30 | 0.4 | 880 | 242 |
| 8 | 8 | 0.50 | 30 | 0.5 | 820 | 231 |
| 9 | 2 | 0.08 | 5 | 0.55 | 1120 | 229 |
| 10 | 2 | 0.08 | 10 | 0.57 | 1040 | 240 |
| 11 | 2 | 0.08 | 50 | 0.63 | 610 | 295 |
| D1 | 2 | 0.08 | 0 | 0.59 | 1430 | 223 |
| D2 | 2 | 0.08 | 55 | 0.62 | 430 | 297 |
| D3 | 14 | 0.67 | 30 | 3.5 | 600 | 270 |
| D4 | 15 | 0.01 | 30 | 0.8 | 810 | 259 |
| D5 | 16 | / | 50 | 3.7 | 570 | 280 |
| • Examples D3 and D4 are not a part of the claimed invention. | | | | | | |

It can be seen from Table 2 that in Example D1 containing no silicon-based materials, energy density is low, although cycle performance is very good. As the content of the silicon-based active material in the negative electrode active material layer gradually increases, the energy density gradually increases, and the cycle stability decreases. In Example D2 having the content of silicon-based active material as high as 55wt%, energy density is as high as 297 Wh/kg, however, cycle performance is significantly deteriorated.

It can be seen from Examples 1-8 and D3-D4 that when the same content of silicon-based active material is used, by adjusting composition and thickness of polymer support layer and metal conductive layer in composite current collector and thus adjusting the brittleness parameter C of the composite current collector, excellent processability of the composite current collector and excellent process yield of electrode plate can be obtained, thereby improving the reliability of the battery during use and obtaining excellent cycle performance. In Example D4, the brittleness parameter C is too low, and the frequency of strip breaking in cold pressing reaches 0.8. In Examples 1-8, as the brittleness parameter C gradually increases from 0.03 to 0.20, the frequency of strip breaking in cold pressing is significantly reduced. However, when the brittleness parameter C further increases, the frequency of strip breaking in cold pressing shows a gradual increase. In Example D3, the brittleness parameter C is too high, and the frequency of strip breaking in cold pressing is even as high as 3.5 times/km.

Moreover, compared with Example D5 using copper as a current collector, Example 11 using a composite current collector with a metal conductive layer has a significantly lower frequency of strip breaking in cold pressing, and at the same time significantly improves the weight energy density and cycle performance of the battery.

It can be seen from Examples 2, 9-11 and D1-D2 that when the same current collector is used, by using silicon-based active materials, the energy density increases and the cycle performance decreases.

Thus, by using a combination of a current collector with a suitable brittleness parameter and a content of silicon-based active material, a combination of excellent energy density and frequency of strip breaking in cold pressing can be obtained, thereby improving the overall performance of the battery.

Experiment 3. Influence of volume average particle size $D_v50$ of silicon-based materials on battery performance

In order to study the influence of volume average particle size $D_v50$ of silicon-based materials on battery performance, in Examples 12-15, Example 2 was repeated, except that the volume average particle size of the silicon-based materials was changed. The performance results of the obtained batteries were tested. The results were shown in Table 3 below.

Table 3 Influence of volume average particle size of silicon-based materials

| Example | Number of current collector | Brittleness parameter C | Mass percentage of silicon-based materials in negative electrode active material layer (wt%) | Volume average particle size $D_v50$ of silicon-based material ($\mu$m) | Frequency of strip breaking in cold pressing (Times/km) | Number of cycles | I Energy Density (Wh/kg) |
|---|---|---|---|---|---|---|---|
| 2 | 2 | 0.08 | 30 | 6 | 0.6 | 850 | 268 |
| 12 | 2 | 0.08 | 30 | 2 | 0.56 | 730 | 267 |
| 13 | 2 | 0.08 | 30 | 15 | 0.67 | 750 | 267 |
| 14 | 2 | 0.08 | 30 | 4 | 0.58 | 810 | 269 |
| 15 | 2 | 0.08 | 30 | 7 | 0.62 | 840 | 268 |

It can be seen from Table 3 that by adjusting and choosing volume average particle size $D_v50$ of silicon-based materials in the preferred range as described herein, the frequency of strip breaking in cold pressing of the negative electrode plate and the cycle performance of the battery can be further improved.

Experiment 4. Influence of coating areal density and compacted density on battery performance and processing technology

In the case of using current collectors with the same content of silicon-based active material and the same brittleness parameters, different coating areal densities and compacted densities were used, and the frequency of strip breaking in cold pressing and the cycle performance and energy density of the resulting batteries were measured. In Experiment 4, Example 4 was repeated, except that coating areal density and compacted density were changed. The results were shown in Table 4 below.

Table 4 Influence of coating areal density and compacted density

| Example | CW (mg/cm$^2$) | PD (g/cm$^3$) | Frequency of strip breaking in cold pressing (Times/km) | Number of cycles | Energy Density (Wh/kg) |
|---|---|---|---|---|---|
| 4 | 10 | 1.5 | 0.2 | 950 | 272 |
| 16 | 17 | 1.7 | 0.44 | 780 | 278 |
| 17 | 15 | 1.7 | 0.42 | 840 | 277 |
| 18 | 12 | 1.7 | 0.4 | 890 | 275 |
| 19 | 9 | 1.7 | 0.38 | 910 | 274 |

(continued)

| Example | CW (mg/cm²) | PD (g/cm³) | Frequency of strip breaking in cold pressing (Times/km) | Number of cycles | Energy Density (Wh/kg) |
|---|---|---|---|---|---|
| 20 | 7 | 1.7 | 0.35 | 920 | 270 |
| 21 | 12 | 1.8 | 0.8 | 720 | 277 |
| 22 | 12 | 1.6 | 0.35 | 920 | 274 |
| 23 | 12 | 1.5 | 0.22 | 940 | 273 |
| 24 | 12 | 1.3 | 0.13 | 960 | 270 |
| 25 | 12 | 1.1 | 0 | 820 | 267 |

It can be seen from Table 4 that with the same content of silicon-based active materials and conditions of current collector, CW and PD will also have an impact on cycle performance and energy density of the battery. Specifically, it can be seen from Examples 16-20 and Examples 21-25 that by using CW in the range of from 9 mg/cm² to 15 mg/cm², PD in the range of from 1.3g/cm⁻³ to 1.7g/cm³ or a combination of the two, energy density of secondary battery can be further increased, and meanwhile cycle life of the secondary battery and the stability during use process are increased.

Experiment 5. Influence of protective layer on battery performance

In order to study the influence of the protective layer on battery performance, in Experiment 5, Example 3 was repeated, except that the current collectors with different structures were used, and the frequency of strip breaking in cold pressing and cycle performance and energy density of the resulting batteries were measured. The results were shown in Table 5 below.

Table 5 Influence of protective layer in composite current collector

| Example | Current collector Nos. | Brittleness parameter C | Mass percentage of silicon-based materials in negative electrode active material layer (wt%) | Frequency of strip breaking in cold pressing (Times/km) | Number of cycles | Energy Density (Wh/kg) |
|---|---|---|---|---|---|---|
| 3 | 3 | 0.10 | 30 | 0.3 | 870 | 269 |
| 26 | 9 | 0.10 | 30 | 0.31 | 880 | 269 |
| 27 | 10 | 0.10 | 30 | 0.29 | 885 | 268 |
| 28 | 11 | 0.10 | 30 | 0.33 | 900 | 270 |
| 29 | 12 | 0.10 | 30 | 0.28 | 890 | 269 |
| 30 | 13 | 0.10 | 30 | 0.3 | 895 | 268 |

It can be seen from Table 5 that by providing one or more protective layers in the current collector, the cycle performance of the battery can be improved. Moreover, it was also found that when upper protective layer and lower protective layer are provided in the current collector and the thickness of the upper protective layer and the lower protective layer conform to $0.5D_b \leq D_a \leq 1.2D_b$, the upper protective layer and the lower protective layer cooperatively protect die metal conductive layer, thereby obtaining better cycle performance and at the same time enabling the battery to have a higher energy density. By using the upper protective layer and the lower protective layer with the same thickness, the cycle performance and energy density of the battery are improved at the same time.

**Claims**

**1.** A secondary battery, comprising a negative electrode plate (30), wherein

the negative electrode plate (30) comprises a composite current collector (10) and a negative electrode active material layer (20) disposed on at least one surface of the composite current collector (10),

the negative electrode active material layer (20) comprises a silicon-based active material, and the silicon-based active material accounts for 0.5 wt% to 50 wt% of total mass of the negative electrode active material layer (20); the composite current collector (10) comprises a polymer support layer (101) and a metal conductive layer (102) disposed on at least one surface of the polymer support layer (101), and brittleness parameter C of the composite current collector (10) ranges from 0.03 to 0.5, wherein

$$C = (T_1 \times D_1)/(T_2 \times D_2) \qquad \text{Formula 1}$$

$T_1$ is tensile strength of the metal conductive layer (102), in MPa;
$D_1$ is thickness of the metal conductive layer (102), in $\mu$m;
$T_2$ is tensile strength of the polymer support layer (101), in MPa,
$D_2$ is thickness of the polymer support layer (101), in $\mu$m;
wherein $T_1$ and $T_2$ are measured at 25°C; and
the tensile strength is measured by cutting a sample cut with a width of 15 mm and a length of 150 mm, then loading between an upper clamp and a lower clamp of American INSTRON 3365 universal tensile tester with an initial length set to 50 mm, and then performing a tensile test at a tensile rate of 5 mm/min until the sample broke.

2. The secondary battery according to claim 1, wherein the brittleness parameter C of the composite current collector (10) ranges from 0.1 to 0.3,

3. The secondary battery according to any of claims 1-2, wherein the silicon-based material comprises one or more of elemental silicon, silicon-oxygen compounds, silicon-carbon composites, silicon halides, and silicon alloys, preferably silicon-oxygen compounds; and/or,
the negative electrode active material also comprises a carbon-based active material selected from one or more of graphite, amorphous carbon and mesophase carbon microspheres, preferably graphite, and more preferably artificial graphite.

4. The secondary battery according to any one of claims 1 to 3, wherein the silicon-based material has a volume average particle size $D_v50$ of from 2 $\mu$m to 15 $\mu$m, preferably from 4 $\mu$m to 7 $\mu$m.

5. The secondary battery according to any one of claims 1 to 4, wherein the negative electrode active material layer (20) has a coating areal density ranging from 9 mg/cm$^2$ to 15 mg/cm$^2$.

6. The secondary battery according to any one of claims 1 to 5, wherein the negative electrode plate (30) has a compacted density ranging from 1.3 g/cm$^3$ to 1.7g/cm$^3$.

7. The secondary battery according to any one of claims 1 to $\delta$, wherein the composite current collector (10) has a Young's modulus E of greater than or equal to 2 GPa, preferably, the E is in a range of from 4 GPa to 28 GPa; wherein the measuring method of Young's modulus E is described in the description wherein a tensile test is performed with Gotech tensile tester at normal temperature and pressure (25°C, 0.1 MPa) by setting an initial position such that the sample between the clamps is 50 mm long and stretching at a speed of 5 mm/min, and the load L (N) from stretching to break and the clamp displacement y (mm) were recorded, then stress $\varepsilon$ (GPa) = L/ (15X h), strain $\eta$ = y/50.

8. The secondary battery according to any one of claims 1 to 7, wherein the metal conductive layer (102) has a tensile strength $T_1$ ranging from 150Mpa to 500MPa, preferably, the $T_1$ is in a range of from 200Mpa to 350MPa.

9. The secondary battery according to any one of claims 1 to 8, wherein the metal conductive layer (102) has a the thickness $D_1$ ranging from 30nm to 3$\mu$m, preferably, the $D_1$ is in a range of from 300nm to 2$\mu$m, more preferably, the $D_1$ is in a range of from 500nm to 1.5$\mu$m.

10. The secondary battery according to any one of claims 1 to 9, wherein the polymer support layer (101) has a tensile strength $T_2$ ranging from 100Mpa to 400MPa, preferably, the $T_2$ is a range of from 150Mpa to 300MPa.

11. The secondary battery according to any one of claims 1 to 10, wherein the polymer support layer (101) has a thickness $D_2$ ranging from 1 $\mu$m to 30$\mu$m, preferably, the $D_2$ is in a range of from 2$\mu$m to 15$\mu$m, more preferably,

the $D_2$ is from 3μm to 8μm.

12. The secondary battery according to any one of claims 1 to 11, wherein the composite current collector (10) further comprises a protective layer (103) disposed on at least one surface of the metal conductive layer (102), and the protective layer (103) comprises one or more of metal, metal oxide and conductive carbon.

13. The secondary battery according to any one of claims 1 to 12, wherein the metal conductive layer (102) contains one or more of nickel, nickel alloy, copper, copper alloy, chromium, titanium, and silver.

14. The secondary battery according to any one of claims 1 to 13, wherein the polymer support layer (101) comprises polymer materials selected from one or more of: polyamides, polyimides, polyesters, polyolefins, polyynes, siloxane polymers, polyethers, polyols, polysulfones, polysaccharide polymers, amino acid polymers, polysulfur nitrides, aromatic ring polymers, aromatic heterocyclic polymers, epoxy resin, phenolic resin, derivatives thereof, cross-linked products thereof, and copolymers thereof,
preferably, the polymer materials are selected from one or more of polycaprolactam, polyhexamethylene adipamide, polyparaphenylene terephthalamide, polyisophthaloyl metaphenylene diamine, polyethylene terephthalate, polybutylene terephthalate, polyethylene naphthalate, polycarbonate, polyethylene, polypropylene, poly(propylene-co-ethylene), polyvinyl alcohol, polystyrene, polyvinyl chloride, polyvinylidene fluoride, polytetrafluoroethylene, poly(sodium styrene sulfonate), polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, phenol resin, acrylonitrile-butadiene-styrene copolymer, derivatives thereof, cross-linked products thereof, and copolymers thereof.

15. Apparatus, comprising the secondary battery according to any one of claims 1 to 14; preferably, the apparatus comprises electric vehicles, hybrid electric vehicles, plug-in hybrid electric vehicles, electric bicycles, electric scooters, electric golf carts, electric trucks, electric ships, and energy storage systems.

**Patentansprüche**

1. Eine Sekundärbatterie, umfassend eine negative Elektrodenplatte (30), wobei

die negative Elektrodenplatte (30) einen Verbundstromkollektor (10) und eine Negativelektroden-Aktivmaterialschicht (20) umfasst, die auf mindestens einer Oberfläche des Verbundstromkollektors (10) angeordnet ist, die Negativelektroden-Aktivmaterialschicht (20) ein siliziumbasiertes Aktivmaterial umfasst, und das siliziumbasierte Aktivmaterial 0,5 Gew.-% bis 50 Gew.-% der Gesamtmasse der Negativelektroden-Aktivmaterialschicht (20) ausmacht;
der Verbundstromkollektor (10) eine Polymerträgerschicht (101) und eine leitende Metallschicht (102) umfasst, die auf mindestens einer Oberfläche der Polymerträgerschicht (101) angeordnet ist, und Sprödigkeitsparameter C des Verbundstromkollektors (10) im Bereich von 0,03 bis 0,5 liegt, wobei

$$C = (T_1{\times}D_1)\,/(T_2{\times}D_2) \qquad \text{Formel 1}$$

$T_1$ die Zugfestigkeit der leitenden Metallschicht (102) in MPa ist,
$D_1$ die Dicke der leitenden Metallschicht (102) in μm ist,
$T_2$ die Zugfestigkeit der Polymerträgerschicht (101) in MPa ist,
$D_2$ die Dicke der Polymerträgerschicht (101) in μm ist,
wobei $T_1$ und $T_2$ bei 25°C gemessen werden; Und
die Zugfestigkeit gemessen wird, indem ein Probenstück mit einer Breite von 15 mm und einer Länge von 150 mm geschnitten und dann zwischen eine obere Klemme und eine untere Klemme des Universal-Zugprüfgeräts American INSTRON 3365 mit einer Anfangslänge von 50 mm geladen wird, anschließend ein Zugversuch mit einer Zuggeschwindigkeit von 5 mm/min bis zum Bruch der Probe durchgeführt wird.

2. Sekundärbatterie nach Anspruch 1, wobei der Sprödigkeitsparameter C des Verbundstromkollektors (10) im Bereich von 0,1 bis 0,3 liegt.

3. Sekundärbatterie (5) nach einem der Ansprüche 1-2, wobei das siliziumbasierte Material eines oder mehrere von elementarem Silizium, Silizium-Sauerstoff-Verbindungen, Silizium-Kohlenstoff-Verbundwerkstoffen, Siliziumhalogeniden und Siliziumlegierungen, vorzugsweise Silizium-Sauerstoff-Verbindungen, umfasst; und/oder, das Negativelektroden-Aktivmaterial auch ein kohlenstoffbasiertes Aktivmaterial, das aus einem oder mehreren von Graphit, amorphem Kohlenstoff und Mesophasen-Kohlenstoffmikrokügelchen, vorzugsweise Graphit und besonders bevorzugt künstlicher Graphit, ausgewählt ist, umfasst.

4. Sekundärbatterie nach einem der Ansprüche 1 bis 3, wobei das siliziumbasierte Material eine volumengemittelte Partikelgröße $D_v50$ von 2 $\mu$m bis 15 $\mu$m, vorzugsweise von 4 $\mu$m bis 7 $\mu$m, aufweist.

5. Sekundärbatterie nach einem der Ansprüche 1 bis 4, wobei die Negativelektroden-Aktivmaterialschicht (20) eine Beschichtungsflächendichte im Bereich von 9 mg/cm$^2$ bis 15 mg/cm$^2$ aufweist.

6. Sekundärbatterie nach einem der Ansprüche 1 bis 5, wobei die negative Elektrodenplatte (30) eine Kompaktdichte im Bereich von 1,3 g/cm$^3$ bis 1,7 g/cm$^3$ aufweist.

7. Sekundärbatterie nach einem der Ansprüche 1 bis 6, wobei der Verbundstromkollektor (10) einen Young-Modul E von größer oder gleich 2 GPa aufweist, vorzugsweise der E in einem Bereich von 4 GPa bis 28 GPa liegt; wobei die Messmethode des Young-Moduls E in der Beschreibung beschrieben ist, wobei ein Zugtest mit einem Gotech-Zugprüfgerät bei normaler Temperatur und normalem Druck (25°C, 0,1 MPa) durchgeführt wird, indem eine Anfangsposition so eingestellt wurde, dass die Probe zwischen den Klemmen 50 mm lang ist und mit einer Geschwindigkeit von 5 mm/min gedehnt wird, und die Last L (N) von der Dehnung bis zum Bruch sowie die Klammerverschiebung y (mm) aufgezeichnet wird, dann Spannung $\varepsilon$ (GPa) = L/(15X h), Dehnung $\eta$ = y/50.

8. Sekundärbatterie nach einem der Ansprüche 1 bis 7, wobei die leitende Metallschicht (102) eine Zugfestigkeit $T_1$ im Bereich von 150 MPa bis 500 MPa aufweist, vorzugsweise liegt $T_1$ im Bereich von 200 MPa bis 350 MPa.

9. Sekundärbatterie nach einem der Ansprüche 1 bis 8, wobei die leitende Metallschicht (102) eine Dicke $D_1$ im Bereich von 30 nm bis 3 $\mu$m aufweist, vorzugsweise $D_1$ im Bereich von 300 nm bis 2 $\mu$m liegt, noch bevorzugter $D_1$ im Bereich von 500 nm bis 1,5 $\mu$m liegt.

10. Sekundärbatterie nach einem der Ansprüche 1 bis 9, wobei die Polymerträgerschicht (101) eine Zugfestigkeit $T_2$ im Bereich von 100 MPa bis 400 MPa aufweist, vorzugsweise $T_2$ im Bereich von 150 MPa bis 300 MPa liegt.

11. Sekundärbatterie nach einem der Ansprüche 1 bis 10, wobei die Polymerträgerschicht (101) eine Dicke $D_2$ im Bereich von 1 $\mu$m bis 30 $\mu$m aufweist, vorzugsweise $D_2$ im Bereich von 2 $\mu$m bis 15 $\mu$m liegt, noch bevorzugtes D2 zwischen 3$\mu$m und 8$\mu$m liegt.

12. Sekundärbatterie nach einem der Ansprüche 1 bis 11, wobei der Verbundstromkollektor (10) außerdem eine Schutzschicht (103) umfasst, die auf mindestens einer Oberfläche der leitenden Metallschicht (102) angeordnet ist, und die Schutzschicht (103) eines oder mehrere von Metall, Metalloxid und leitfähigem Kohlenstoff umfasst.

13. Sekundärbatterie nach einem der Ansprüche 1 bis 12, wobei die leitende Metallschicht (102) eines oder mehrere von Nickel, Nickellegierung, Kupfer, Kupferlegierung, Chrom, Titan und Silber enthält.

14. Sekundärbatterie nach einem der Ansprüche 1 bis 13, wobei die Polymerträgerschicht (101) Polymermaterialien umfasst, ausgewählt aus einem oder mehreren von: Polyamiden, Polyimiden, Polyestern, Polyolefinen, Polyinen, Siloxanpolymeren, Polyethern, Polyolen, Polysulfonen, Polysaccharidpolymeren, Aminosäurepolymeren, Polyschwefelnitriden, aromatischen Ringpolymeren, aromatische heterozyklische Polymere, Epoxidharz, Phenolharz, Derivate davon, vernetzte Produkte davon und Copolymere davon, wobei die Polymermaterialien ausgewählt sind aus einem oder mehreren von Polycaprolactam, Polyhexamethylenadipamid, Polyparaphenylenterephthalamid, Polyisophthaloylmetaphenylendiamin, Polyethylenterephthalat, Polybutylenterephthalat, Polyethylennaphthalat, Polycarbonat, Polyethylen, Polypropylen, Poly(propylen-co-ethylen), Polyvinylalkohol, Polystyrol, Polyvinylchlorid, Polyvinylidenfluorid, Polytetrafluorethylen, Poly(natriumstyrolsulfonat), Polyacetylen, Silikonkautschuk, Polyoxymethylen, Polyphenylenether, Polyphenylensulfid, Polyethylenglykol, Polyschwefelnitrid, Polyphenylen, Polypyrrol, Polyanilin, Polythiophen, Polypyridin, Cellulose, Stärke, Protein, Epoxidharz, Phenolharz, Acrylnitril-Butadien-Styrol-Copolymer, Derivate davon, vernetzte Produkte davon und Copolymere davon.

**15.** Vorrichtung, umfassend die Sekundärbatterie nach einem der Ansprüche 1 bis 14; vorzugsweise die Vorrichtung Elektrofahrzeuge, Hybridelektrofahrzeuge, Plug-in-Hybridelektrofahrzeuge, Elektrofahrräder, Elektroroller, Elektrogolfwagen, Elektrolastwagen, Elektroschiffe und Energiespeichersysteme umfasst.

**Revendications**

**1.** Batterie secondaire, comprenant une plaque d'électrode négative (30), **caractérisée en ce que**,

la plaque d'électrode négative (30) comprend un collecteur de courant composite (10) et une couche de matériau actif d'électrode négative (20) disposée sur au moins une surface du collecteur de courant composite (10), la couche de matériau actif d' électrode négative (20) comprend un matériau actif à base de silicium, et le matériau actif à base de silicium représente 0,5 % en poids à 50 % en poids de la masse totale de la couche de matériau actif d'électrode négative (20) ;

le collecteur de courant composite (10) comprend une couche de support polymère (101) et une couche conductrice métallique (102) disposées sur au moins une surface de la couche de support polymère (101), et le paramètre de fragilité C du collecteur de courant composite (10) est compris entre 0,03 et 0,5, où

$$C=(T_1 \times D_1)/(T_2 \times D_2) \qquad \text{Formule 1}$$

$T_1$ est la résistance à la traction de la couche conductrice métallique (102), en MPa ;
$D_1$ est l'épaisseur de la couche conductrice métallique (102), en $\mu$m ;
$T_2$ est la résistance à la traction de la couche de support polymère (101), en MPa ;
$D_2$ est l'épaisseur de la couche de support polymère (101), en $\mu$m ;
où $T_1$ et $T_2$ sont mesurées à 25 °C ; et
la résistance à la traction est mesurée en coupant un échantillon en section ayant une largeur de 15 mm et une longueur de 150 mm, puis le chargeant entre une pince supérieure et une pince inférieure d'un testeur de traction universel américain INSTRON 3365 ayant une longueur initiale réglée à 50 mm, puis effectuant un essai de traction à une vitesse de traction de 5 mm/min jusqu'à la rupture de l'échantillon.

**2.** Batterie secondaire selon la revendication 1, **caractérisée en ce que** le paramètre de fragilité C du collecteur de courant composite (10) est compris entre 0,1 et 0,3.

**3.** Batterie secondaire selon l'une quelconque des revendications 1 à 2, **caractérisée en ce que**, le matériau à base de silicium comprend un ou plusieurs parmi le silicium élémentaire, des composés de silicium-oxygène, des composites de silicium-carbone, des halogénures de silicium et des alliages de silicium, de préférence des composés de silicium-oxygène ; et/ou,
le matériau actif d'électrode négative comprend également un matériau actif à base de carbone qui est un ou plusieurs choisi parmi le graphite, le carbone amorphe et des microsphères de carbone mésophase, de préférence le graphite, et de plus préférence le graphite artificiel.

**4.** Batterie secondaire selon l'une quelconque des revendications 1 à 3, **caractérisée en ce que**, le matériau à base de silicium présente une taille moyenne des particules en volume $D_v50$ de 2 $\mu$m à 15 $\mu$m, de préférence de 4 $\mu$m à 7 $\mu$m.

**5.** Batterie secondaire selon l'une quelconque des revendications 1 à 4, **caractérisée en ce que**, la couche de matériau actif d'électrode négative (20) présente une densité surfacique de revêtement comprise entre 9 mg/cm$^2$ et 15 mg/cm$^2$.

**6.** Batterie secondaire selon l'une quelconque des revendications 1 à 5, **caractérisée en ce que**, la plaque d'électrode négative (30) présente une densité tassée comprise entre 1,3 g/cm$^3$ et 1,7 g/cm$^3$.

**7.** Batterie secondaire selon l'une quelconque des revendications 1 à 6, **caractérisée en ce que**, le collecteur de courant composite (10) présente un module de Young E supérieur ou égal à 2 GPa, de préférence, le E se situe dans une plage de 4 GPa à 28 GPa ; dans laquelle la méthode de mesure du module de Young E est décrite dans la description dans laquelle un essai de traction est effectué à l'aide d'un testeur de traction Gotech à une température et une pression normales (25 °C, 0,1 MPa) en réglant une position initiale de sorte que l'échantillon entre les pinces mesure 50 mm de long, l'étirant à une vitesse de 5 mm/min, et enregistrant la charge L(N) de l'étirement à la rupture et le déplacement de la pince y (mm), puis la contrainte $\varepsilon$ (GPa) = L/ (15X h), la déformation $\eta$= y/50.

8. Batterie secondaire selon l'une quelconque des revendications 1 à 7, **caractérisée en ce que**, la couche conductrice métallique (102) présente une résistance à la traction $T_1$ comprise entre 150 Mpa et 500 MPa, de préférence, la $T_1$ se situe dans une plage de 200 Mpa à 350 MPa.

9. Batterie secondaire selon l'une quelconque des revendications 1 à 8, **caractérisée en ce que**, la couche conductrice métallique (102) présente une épaisseur $D_1$ comprise entre 30 nm et 3 $\mu$m, de préférence, la $D_1$ se situe dans une plage de 300 nm à 2 $\mu$m, de préférence, la $D_1$ se situe dans une plage de 500 nm à 1,5 $\mu$m.

10. Batterie secondaire selon l'une quelconque des revendications 1 à 9, **caractérisée en ce que**, la couche de support polymère (101) présente une résistance à la traction $T_2$ comprise entre 100 Mpa et 400 MPa, de préférence, la $T_2$ se situe dans une plage de 150 Mpa à 300 MPa.

11. Batterie secondaire selon l'une quelconque des revendications 1 à 10, **caractérisée en ce que**, la couche de support polymère (101) présente une épaisseur $D_2$ comprise entre 1 $\mu$m et 30 $\mu$m, de préférence, la $D_2$ se situe dans une plage de 2 $\mu$m à 15 $\mu$m, de plus préférence, la $D_2$ est comprise entre 3 $\mu$m et 8 $\mu$m.

12. Batterie secondaire selon l'une quelconque des revendications 1 à 11, **caractérisée en ce que**, le collecteur de courant composite (10) comprend en outre une couche protectrice (103) disposée sur au moins une surface de la couche conductrice métallique (102), et la couche protectrice (103) comprend une ou plusieurs parmi un métal, un oxyde métallique et un carbone conducteur.

13. Batterie secondaire selon l'une quelconque des revendications 1 à 12, **caractérisée en ce que**, la couche conductrice métallique (102) contient un ou plusieurs éléments suivants : le nickel, un alliage de nickel, le cuivre, un alliage de cuivre, le chrome, le titane et l'argent.

14. Batterie secondaire selon l'une quelconque des revendications 1 à 13, **caractérisée en ce que**, la couche de support polymère (101) comprend un ou plusieurs matériaux polymères choisis parmi : des polyamides, des polyimides, des polyesters, des polyoléfines, des polyynes, des polymères siloxanes, des polyéthers, des polyol sulfones, des polymères polysaccharidiques, des polymères d'acides aminés, des nitrures de polysulflir, des polymères cycliques aromatiques, des polymères hétérocycliques aromatiques, le résine époxy, le résine phénolique, des dérivés de ceux-ci, des produits réticulés de ceux-ci et des copolymères de ceux-ci,
de préférence, les matériaux polymères sont un ou plusieurs choisis parmi le polycaprolactames, le polyhexaméthylène-adipamide, le polyparaphénylène téréphtalamide, le polyisophthaloyl métaphénylène diamine, le polyéthylène téréphtalate, le polybutylène téréphtalate, le polyéthylène naphtalate, le polycarbonate, le polyéthylène, le polypropylène, le poly(propylène-co-éthylène), l'alcool polyvinylique, le polystyrène, le chlorure de polyvinyle, le fluorure de polyvinylidène, le polytétrafluoroéthylène, le poly(sulfonate de styrène sodique), le polyacétylène, le caoutchouc de silicone, le polyoxyméthylène, l'éther de polyphénylène, le sulfure de polyphénylène, le polyéthylène glycol, le nitrure de polysoufre, le polyphénylène, le polypyrrole, le polyaniline, le polythiophène, le polypyridine, les celluloses, l'amidon, les protéines, le résine époxy, le résine phénolique, le copolymère acrylonitrile-butadiène-styrène, des dérivés de ceux-ci, des produits réticulés de ceux-ci et des copolymères de ceux-ci.

15. Appareil, comprenant la batterie secondaire selon l'une quelconque des revendications 1 à 14, de préférence ; l'appareil comprenant des véhicules électriques, des véhicules électriques hybrides, des véhicules électriques hybrides rechargeables, des vélos électriques, des scooters électriques, des voiturettes de golf électrique, des camions électriques, des bateaux électriques ou des systèmes de stockage d'énergie.

<u>10</u>

101a

101

D₁

D₁ D₂

101b

102

Fig. 1

<u>10</u>

101a

1011

101 { 1012

1013

101b

102

Fig. 2

<u>10</u>

D₁ D₃

101a

D₁

D₂

101b

103

102

101

Fig. 3

10

101a 103

D₁ 102

D₂ D₃ 101

101b

Fig. 4

10

101a 103 Dₐ

D₁ 102

D₂ D_b 101

101b

Fig. 5

30

10 20

Fig.6

**5**

Fig. 7

**5**

53

52

52

51

Fig. 8

Fig. 9

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3951956 A1
- CN 108832134 A
- EP 3624240 A1
- CN 110943227
- CN 10584597 A
- CN 109461880 A
- EP 3972018 A1
- EP 3796437 A1
- EP 3799172 A1
- EP 3872908 A1